(19) Europäisches Patentamt
European Patent Office
Office européen des brevets

(11) Publication number: **0 185 054**
**B1**

(12) # EUROPEAN PATENT SPECIFICATION

(45) Date of publication of patent specification: **28.09.88**

(51) Int. Cl.$^4$: **C 08 L 71/04**, C 08 L 77/00, C 08 K 5/09, C 08 K 5/11, C 08 K 5/20

(21) Application number: **85902852.4**

(22) Date of filing: **21.05.85**

(86) International application number: **PCT/US85/00944**

(87) International publication number: **WO 85/05372 05.12.85 Gazette 85/26**

(54) **MODIFIED POLYPHENYLENE ETHER-POLYAMIDE COMPOSITIONS AND PROCESS.**

(30) Priority: **21.05.84 US 612298**
**21.05.84 US 612369**
**20.05.85 US 736489**
**20.05.85 US 736490**

(43) Date of publication of application: **25.06.86 Bulletin 86/26**

(45) Publication of the grant of the patent: **28.09.88 Bulletin 88/39**

(84) Designated Contracting States: **DE FR GB IT NL**

(56) References cited:
**EP-A-0 024 120**
**GB-A-2 054 623**

(73) Proprietor: **GENERAL ELECTRIC COMPANY**
**1 River Road**
**Schenectady New York 12305 (US)**

(72) Inventor: **GALLUCCI, Russell, Robert**
**68 Winesap Road**
**Pittsfield, MA 01201 (US)**
Inventor: **VAN DER MEER, Roelof**
**Jan van Goyenstraat 21**
**NL-4625 AX Bergen op Zoom (NL)**
Inventor: **AVAKIAN, Roger, W.**
**212 Doreen Street**
**Pittsfield, MA 01201 (US)**

(74) Representative: **Sieb, Rolf, Dr.**
**General Electric - Deutschland Patentabteilung**
**Praunheimer Landstrasse 50**
**D-6000 Frankfurt/Main (DE)**

**EP 0 185 054 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to modified polyphenylene ether-polyamide compositions having improved chemical resistance, processability, elongation properties and/or impact strength as compared to unmodified compositions. More specifically, it relates to a resin composition which comprises a combination and/or the reaction product of a) one or more polyphenylene ether resins, b) one or more polyamide resins and c) at least one aliphatic polycarboxylic acid or derivative modifier.

The invention also relates to an improved process for the manufacture of said modified polyphenylene ether-polyamide compositions wherein the improvement comprises precompounding the aliphatic polycarboxylic acid modifier with either the polyamide or, preferably, the polyphenylene ether prior to compounding with the other polymer. Such precompounding unexpectedly results in improved physical properties in the final composition over those prepared from the same ingredients without precompounding. Inasmuch as the compositions of the present invention may further comprise impact modifiers, reinforcing agents, stabilizers and the like, these may also be precompounded with either of the polymers for improved properties.

The polyphenylene ether resins are characterized by a unique combination of chemical, physical and electrical properties over a temperature range of more than 600°F (316°C), extending from a brittle point of about −275°F (−135°C) to a heat distortion temperature of about 375°F (246°C). This combination of properties renders the polyphenylene ethers suitable for a broad range of applications.

However, in spite of the aforementioned beneficial properties, the usefulness of the polyphenylene ether resins is limited as a consequence of their poor processability, impact resistance and chemical resistance.

U.S.—A—3,379,792 discloses polymer blends wherein the processability of polyphenylene ether resins may be improved by blending therewith from 0.1 to 25% by weight of a polyamide. However, the advantages of the invention are limited by the fact that when the concentration of the polyamide exceeds 20% by weight, appreciable losses in other physical properties result. Specifically, there is no, or at best poor, compatibility between the polyphenylene ether and the polyamide such that phase separation of the resins occurs on molding or the molded article is inferior in mechanical properties.

U.S.—A—4,315,086 discloses polyphenylene ether blends having improved chemical resistance without a loss of other mechanical properties by blending therewith a polyamide and a specific compound selected from the group consisting essentially of A) liquid diene polymers, B) epoxy compounds and C) compounds having in the molecule both of i) an ethylenic carbon-carbon double bond or carbon-carbon triple bond and ii) a carboxylic acid, acid anhydride, acid amide, imide, carboxylic acid ester, amino or hydroxyl group.

Finally, EP—A—46040 discloses the use of a copolymer comprising units of a vinyl aromatic compound and either an alpha,beta-unsaturated dicarboxylic acid anhydride or an imide compound thereof as a modifier to an impact resistant polyphenylene ether-polyamide blend for improved heat resistance and oil resistance.

Applicants have now discovered novel polyphenylene ether polyamide blends having improved impact strength, elongation, chemical resistance, processability and/or heat resistance as well as reduced water absorption as compared to unmodified polyphenylene ether-polyamide compositions. Specifically, applicants have discovered novel resin compositions having the aforementioned properties comprising an admixture and/or the reaction product of a) one or more polyphenylene ether resins, b) one or more polyamide resins and c) one or more aliphatic polycarboxylic acids represented by the formula:

$$(R^{I}O)_mR(COOR^{II})_n(CONR^{III}R^{IV})_s$$

or salts thereof, wherein R is a linear or branched chain, saturated aliphatic hydrocarbon of from 2 to 20, preferably 2 to 10, carbon atoms; $R^I$ is selected from the group consisting of hydrogen or an alkyl, aryl, acyl or carbonyl dioxy group of 1 to 10, preferably 1 to 4 carbon atoms, most preferably hydrogen; each $R^{II}$ is independently selected from the group consisting of hydrogen or an alkyl or aryl group of from 1 to 20 carbon atoms, preferably from 1 to 10 carbon atoms; each $R^{III}$ and $R^{IV}$ is independently selected from the group consisting of hydrogen or an alkyl or aryl group of from 1 to 10, preferably from 1 to 6, most preferably 1 to 4, carbon atoms; m is equal to 1 and (n+s) is greater than or equal to 2, preferably equal to 2 or 3, and n and s are each greater than or equal to zero and wherein ($OR^I$) is alpha or beta to a carbonyl group and at least two carbonyl groups are separated by 2 to 6 carbon atoms. Further, these compositions may contain stabilizing and/or property improving amounts of primary or secondary amines. Optionally, the compositions of the present invention may further comprise fillers as well as other property enhancing additives such as polymeric impact modifiers and/or inorganic reinforcing additives and/or other polymers including alkenyl aromatic polymers such as the styrenic polymers.

Additionally, applicants have now discovered an improved process for the preparation of the said polyphenylene ether-polyamide blends. Specifically, while most any known process for the preparation of blend compositions, e.g., melt blending, may be employed in the preparation of the compositions of the present invention, applicants have surprisingly found further enhancement in impact strength, elongation, processability and the like by precompounding the aliphatic polycarboxylic acid modifier with either of the

polyphenylene ether or polyamide resins prior to compounding with the other. Said precompounding steps may also be applied with respect to any additional additives employed in the preparation of the compositions.

Although the exact physical configuration of the compositions of the present invention is not known, it is generally believed that the compositions comprise a dispersion of one polymer in the other. Applicants believe the likely configuration is wherein the polyphenylene ether is dispersed in a polyamide matrix, however, the inverse may also be possible particularly where the polyamide is present in only a minor amount. Applicants also contemplate that there may be present in the products produced hereby some graft polyphenylene ether-polyamide products. Furthermore, applicants contemplate that grafting, if present, may be such that the polycarboxylic acid may, at least in part, promote grafting and/or act as a graft-linking agent itself. Thus, all such dispersions as well as graft, partially grafted and non-grafted products are within the full intended scope of the invention.

The polyphenylene ethers suitable for use in the practice of the present invention are well known in the art and may be prepared by any of a number of catalytic and non-catalytic processes from corresponding phenols or reactive derivatives thereof. Examples of polyphenylene ethers and methods for their production are disclosed in U.S.—A—3,306,874; 3,306,875; 3,257,357; 3,257,358; 3,337,501 and 3,787,361. For brevity, the term "polyphenylene ether" as used throughout this specification and the appended claims will include not only unsubstituted polyphenylene ether (made from phenol) but also polyphenylene ethers substituted with various substituents. The term also includes polyphenylene ether copolymers, graft copolymers and block copolymers of alkenyl aromatic compounds, especially vinyl aromatic compounds, as disclosed below, and a polyphenylene ether.

Suitable phenol compounds for the preparation of the polyphenylene ethers may be represented by the general formula:

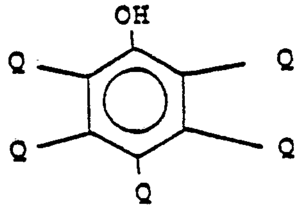

I

wherein each Q is a monovalent substituent individually selected from the group consisting of hydrogen, halogen, aliphatic and aromatic hydrocarbon and hydrocarbonoxy radicals free of a tertiary alpha-carbon atom and halohydrocarbon and halohydrocarbonoxy radicals free of a tertiary alpha-carbon atom and having at least two carbon atoms between the halogen atom and the phenyl nucleus, and wherein at least one Q is hydrogen.

As specific examples of the phenol compound represented by the above formula, there may be given phenol; o-, m- and p-cresols; 2,6, 2,5, 2,4 and 3,5 dimethylphenols; 2 - methyl - 6 - phenyl - phenol; 2,6-diphenylphenol; 2,6-diethylphenol; 2 - methyl - 6 - ethyl - phenol; and 2,3,5-, 2,3,6-, and 2,4,6 - trimethylphenols.

Two or more phenol compounds may be used in combination should copolymers be desired. Additionally, copolyphenylene ethers may also be prepared from a phenol compound of the above general formula with a phenol compound not represented by the above general formula including, for example, a dihydric phenol such as bisphenol-A, tetrabromobisphenol-A, resorcinol or hydroquinone.

Illustrative of suitable polyphenylene ethers there may be given, for example, poly(2,6 - dimethyl - 1,4 - phenylene)ether; poly(2 - methyl - 1,4 - phenylene)ether, poly(3 - methyl - 1,4 - phenylene)ether; poly(2,6 - diethyl - 1,4 - phenylene)ether; poly(2 - methyl - 6 - allyl - 1,4 - phenylene)ether; poly(2,6 - dichloromethyl - 1,4 - phenylene)ether; poly(2,3,6 - trimethyl - 1,4 - phenylene)ether; poly(2,3,5,6 - tetramethyl phenylene)ether; poly(2,6 - dichloro - 1,4 - phenylene)ether; poly(2,6 - diphenyl - 1,4 - phenylene)ether; poly(2,5 - dimethyl - 1,4 - phenylene)ether. Further, as mentioned above, copolymers of the phenol compounds may also be used.

Preferred polyphenylene ethers will have the formula:

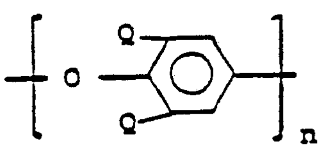

where Q is as defined above and n is at least 50, preferably from 50 to 200. Examples of polyphenylene ethers corresponding to the above formula can be found in the above referenced patents and include, among others: poly(2,6 - dilauryl - 1,4 - phenylene)ether; poly(2,6 - diphenyl - 1,4 - phenylene)ether; poly(2,6 - dimethoxy - 1,4 - phenylene)ether; poly(2,6 - diethoxy - 1,4 - phenylene)ether; poly(2 - methoxy - 6 - ethoxy - phenylene)ether; poly(2 - ethyl - 6 - stearyloxy - 1,4 - phenylene)ether; poly(2,6 - dichloro - 1,4 - phenylene)ether; poly(2 - methyl - 6 - phenyl - 1,4 - phenylene)ether;

poly(2,6 - dibenzyl - 1,4 - phenylene)ether; poly(2 - ethoxy - 1,4 - phenylene)ether; poly(2 - chloro - 1,4 - phenylene)ether; poly(2,6 - dibromo - 1,4 - phenylene)ether.

For the purpose of the present invention, an especially preferred family of polyphenylene ethers include those having a $C_1$ to $C_4$ alkyl substitution in the two positions ortho to the oxygen ether atom. Illustrative members of this class are: poly(2,6 - dimethyl - 1,4 - phenylene)ether; poly(2,6 - diethyl - 1,4 - phenylene)ether; poly(2 - methyl - 6 - ethyl - 1,4 - phenylene)ether; poly(2,6 - dipropyl - 1,4 - phenylene)ether; poly(2 - ethyl - 6 - propyl - 1,4 - phenylene)ether; and the like; most preferably poly(2,6 - dimethyl - 1,4 - phenylene)ether.

One method for the production of the above polyphenylene ethers is by the oxidation of a phenol compound by oxygen or an oxygen-containing gas in the presence of a catalyst for oxidative coupling. There is no particular limitation as to the choice of catalysts and any catalysts for oxidation polymerization can be employed. As typical examples of the catalyst, there may be given a catalyst comprising a cuprous salt and a tertiary amine and/or secondary amine, such as cuprous chloride-trimethylamine and dibutylamine, cuprous acetate-triethylamine or cuprous chloride-pyridine; a catalyst comprising a cupric salt, a tertiary amine, and an alkali metal hydroxide, such as cupric chloride-pyridine-potassium hydroxide; a catalyst comprising a manganese salt and a primary amine, such as manganese chloride-ethanolamine or manganese acetate-ethylenediamine; a catalyst comprising a manganese salt and an alcoholate or phenolate, such as manganese chloride-sodium methylate or manganese chloride-sodium phenolate; and a catalyst comprising a cobalt salt and a tertiary amine.

Polyamides suitable for the preparation of the compositions of the present invention may be obtained by polymerizing a monoamino-monocarboxylic acid or a lactam thereof having at least 2 carbon atoms between the amino and carboxylic acid group; or by polymerizing substantially equimolar proportions of a diamine which contains at least 2 carbon atoms between the amino groups and a dicarboxylic acid; or by polymerizing a monoaminocarboxylic acid or a lactam thereof as defined above together with substantially equimolecular proportions of a diamine and a dicarboxylic acid. The dicarboxylic acid may be used in the form of a functional derivative thereof, for example an ester or acid chloride.

The term "substantially equimolecular" proportions (of the diamine and of the dicarboxylic acid) is used to cover both strict equimolecular proportions and slight departures therefrom which are involved in conventional techniques for stabilizing the viscosity of the resultant polyamides.

Examples of the aforementioned monoamino-monocarboxylic acids or lactams thereof which are useful in preparing the polyamides include those compounds containing from 2 to 16 carbon atoms between the amino and carboxylic acid groups, said carbon atoms forming a ring with the —CO—NH— group in the case of a lactam. As particular examples of aminocarboxylic acids and lactams there may be mentioned -aminocaproic acid, butyrolactam, pivalolactam, caprolactam, capryl-lactam, enantholactam, undecanolactam, dodecanolactam and 3- and 4-aminobenzoic acids.

Diamine suitable for use in the preparation of the polyamides include the straight chain and branched, alkyl, aryl and alkyl-aryl diamines. Such diamines include, for example, those represented by the general formula:

$$H_2N(CH_2)_nNH_2$$

wherein n is an integer of from 2 to 16, such as trimethylenediamine, tetramethylenediamine, pentamethylenediamine, octamethylenediamine and especially hexamethylenediamine, as well as trimethyl hexamethylene diamine, meta-phenylene diamine, meta-xylylene diamine.

The dicarboxylic acids may be aromatic, for example isophthalic and terephthalic acids. Preferred dicarboxylic acids are of the formula

$$HOOC—Y—COOH$$

wherein Y represents a divalent aliphatic group containing at least 2 carbon atoms, and examples of such acids are sebacic acid, octadecanedoic acid, suberic acid, glutaric acid, pimelic acid and adipic acid.

Typical examples of the polyamides or nylons, as these are often called, include for example polyamides 6, 6/6, 11, 12, 6/3, 6/4, 6/10 and 6/12 as well as polyamides resulting from terephthalic acid and/or isophthalic acid and trimethyl hexamethylene diamine, polyamides resulting from adipic acid and meta xylylenediamines, polyamides resulting from adipic acid, azelaic acid and 2,2 - bis - (p - aminocyclohexyl)propane and polyamides resulting from terephthalic acid and 4,4' - diamino - dicyclohexylmethane. Mixtures and/or copolymers of two or more of the foregoing polyamides or prepolymers thereof, respectively, are also within the scope of the present invention. Preferred polyamides are the polyamides 6, 6/6, 11 and 12, most preferably polyamide 6/6.

It is also to be understood that the use of the term "polyamides" herein and in the appended claims is intended to include the toughened or super tough polyamides. Super tough polyamides, or super tough nylons, as they are more commonly known, are available commercially, e.g. from E. I. duPont under the tradename Zytel ST®, or may be prepared in accordance with a number of U.S. Patents including, among others, U.S.—A—4,174,358; U.S.—A—4,474,927; U.S.—A—4,346,194; U.S.—A—4,251,644. These super tough nylons are prepared by blending one or more polyamides with one or more polymeric or

copolymeric elastomeric toughening agents. Suitable toughening agents are disclosed in the above-identified U.S. Patents as well as in U.S.—A—3,884,882 and 4,147,740, "Preparation and Reactions of Epoxy-Modified Polyethylene", J. Appl. Poly. Sci., V. 27, pp. 425—437 (1982). Typically, these elastomeric polymers and copolymers may be straight chain or branched as well as graft polymers and copolymers, including core-shell, graft copolymers, and are characterized as having incorporated therein either by copolymerization or by grafting on the preformed polymer, a monomer having functional and/or active or highly polar groupings capable of interacting with or adhering to the polyamide matrix so as to enhance the toughness of the polyamide polymer.

The blending ratio of polyphenylene ether to polyamide is 5 to 95% by wt. preferably 30 to 70% by wt of the former to 95 to 5% by wt, preferably 70 to 30% by wt of the latter. When the polyamide is less than 5 wt percent, its effect to improve solvent resistance is small, while when it exceeds 95 wt percent, thermal properties such as heat distortion temperature tend to become poor.

Compounds useful for improving the physical properties of the polyphenylene ether-polyamide compositions are aliphatic polycarboxylic acids and salts thereof represented by the formula:

$$(R^{I}O)_mR(COOR^{II})_n(CONR^{III}R^{IV})_s$$

wherein R is a linear or branched chain, saturated aliphatic hydrocarbon of from 2 to 20, preferably 2 to 10, carbon atoms; $R^I$ is selected from the group consisting of hydrogen or an alkyl, aryl, acyl or carbonyl dioxy group of 1 to 10, preferably 1 to 6, most preferably 1 to 4, carbon atoms, especially preferred is hydrogen; each $R^{II}$ is independently selected from the group consisting of hydrogen or an alkyl or aryl group of from 1 to 20 carbon atoms, preferably from 1 to 10 carbon atoms; each $R^{III}$ and $R^{IV}$ is independently selected from the group consisting of hydrogen or an alkyl or aryl group of from 1 to 10, preferably from 1 to 6, most preferably 1 to 4, carbon atoms; m is equal to 1 and (n+s) is greater than or equal to 2, preferably equal to 2 or 3, and n and s are each greater than or equal to zero and wherein $(OR^I)$ is alpha or beta to a carbonyl group and at least two carbonyl groups are separated by 2 to 6 carbon atoms. Obviously, $R^I$, $R^{II}$, $R^{III}$ and $R^{IV}$ cannot be aryl when the respective substituent has less than 6 carbon atoms.

The polycarboxylic acid modifiers suitable for use herein encompass three classes, the polycarboxylic acids, the acid esters and the acid amides. Thus, when used herein and in the appended claims, it is to be understood that the term "polycarboxylic acid" refers to all these classes. Illustrative of suitable polycarboxylic acids there may be given citric acid, malic acid, and agaricic acid; including the various commercial forms thereof, such as, for example, the anhydrous and hydrated acids. Illustrative of acid esters useful herein include for example, acetyl citrate and mono- and/or di- stearyl citrates. Suitable acid amides useful herein include for example N,N'-diethyl citric acid amide; N,N'-dipropyl citric acid amide; N-phenyl citric acid amide; N-dodecyl citric acid amide; N,N'-didodecyl citric acid amide and N-dodecyl malic acid amide.

Salts of the foregoing polycarboxylic acids are also suitable for use in the practice of the present invention. Especially preferred salts include the salts with amines and preferably, the alkali and alkaline metal salts. Exemplary of suitable salts include calcium malate, calcium citrate, potassium malate and potassium citrate.

The amount of the polycarboxylic acid to be used is that amount which manifests property improvement, especially improved compatibility as well as improved processability, impact strength and/or elongation, in the polyphenylene ether-polyamide compositions. In general, the amount of polycarboxylic acid compounds used will be up to 4%, preferably from 0.05 to 4%, most preferably from 0.1 to 2% by weight based on the total composition. Although higher amounts may be used, the preparation of such compositions causes significant problems in processing resulting in compositions having large die-swell and/or may not give optimum property improvement. The specific amount of the polycarboxylic acid compound to be used to achieve optimum results for a given composition is dependent, in part, on the specific polycarboxylic acid and polymers used, the weight ratio of said polymers and the processing conditions.

In addition to the improved processability impact strength and elongation, many of the compositions prepared in accordance with the present invention manifest improvements in other physical properties and characteristics including for example, reduced water absorption.

The above-mentioned property improving polycarboxylic acid compound may be used alone or in combination with a primary or secondary amine. The presence of the amine is found to enhance the improvement of certain physical properties, especially brightness, when used in combination with various polycarboxylic acids, especially for example with malic acid. Suitable amines include those primary and secondary amines having from 1 to 20, preferably from 1 to 10 carbon atoms. Illustrative of said suitable amines there may be given, methyl ethylamine, diethylamine, butylamine, dibutylamine, aniline, n-octadecylamine and the like. The amount of the primary or secondary amine to be used is generally up to 3% by wt, preferably from 0.35 to 1% by wt.

In the practice of the present invention, it may be further desirable to add an additional modifier resin or resin combination to further improve the physical properties, particularly the impact strength, and/or processability of the composition. Such modifier resins are well known in the art and are typically derived from one or more monomers selected from the group consisting of olefins, vinyl aromatic monomers,

acrylic or alkyl acrylic acids and their ester derivatives as well as conjugated dienes. Especially preferred modifier resins are the rubbery high-molecular weight materials including natural and synthetic polymeric materials showing elasticity at room temperature. Suitable modifier resins include both homopolymers and copolymers, including random block, radial block, graft and core-shell copolymers as well as combinations thereof. The modifier resin or resin combination may be present in an amount up to 50% by weight, preferably 35% by weight, based on the total composition.

Polyolefins or olefin-based copolymer employable in the practice of the present invention include, among others, low density polyethylene, high density polyethylene, linear low density polyethylene, isotactic polypropylene, poly(1-butene), poly(4 - methyl - 1 - pentene), propylene-ethylene copolymers. Additional olefin copolymers include copolymers of one or more alpha olefins, particularly ethylene, with copolymerizable monomers including for example vinyl acetate, acrylic acids and alkyl acrylic acids as well as the ester derivatives thereof including for example, ethylene acrylic acid, ethylacrylate, methacrylic acid, methyl methacrylate. Finally, an additional class of olefin-based copolymers suitable for use herein include the ionomer resins, which may be wholly or partially neutralized with metal ions.

A second class of modifier resins employable herein are those derived from the vinyl aromatic monomers. These include, for example, modified and unmodified polystyrenes, ABS type graft copolymers; AB and ABA type block and radial block copolymers and vinyl aromatic conjugated diene core-shell graft copolymers. Modified and unmodified polystyrenes include homopolystyrenes and rubber modified polystyrenes, such as butadiene rubber modified polystyrene otherwise referred to as high impact polystyrene or HIPS. Additional useful polystyrenes include copolymers of styrene and various monomers, including for example, poly(styrene-acrylonitrile) (SAN), styrene-butadiene copolymers as well as the modified alpha and para substituted styrenes and any of the styrene resins disclosed in U.S.—A—3,383,435. ABS type of graft copolymers are typified as comprising a rubbery polymeric backbone derived from a conjugated diene alone or in combination with a monomer copolymerizable therewith having grafted thereon at least one monomer, and preferably two, selected from the group consisting of monoalkenyl arene monomers and substituted derivatives thereof as well as acrylic monomers such as acrylonitriles and acrylic and alkyl acrylic acids and their esters.

An especially preferred class of vinyl aromatic monomer derived polymer resins are the block copolymers comprising monoalkenyl arene blocks and hydrogenated, partially hydrogenated and non-hydrogenated conjugated diene blocks and represented as AB and ABA block copolymers. Suitable AB type block copolymers are disclosed in for example U.S.—A—3,078,254; 3,402,159; 3,297,793; 3,265,765; and 3,594,452 and GB—A—1,264,741. Exemplary of typical species of AB block copolymers there may be given:

polystyrene-polybutadiene (SBR)
polystyrene-polyisoprene and
poly(alpha-methylstyrene)-polybutadiene.

Such AB block copolymers are available commercially from a number of sources including Phillips under the trademark Solprene.

Additionally, ABA triblock copolymers and processes for their production as well as hydrogenation, if desired, are disclosed in U.S.—A—3,149,182; 3,231,635; 3,462,162; 3,287,333; 3,595,942; 3,694,523 and 3,842,029.

Exemplary of typical species of triblock copolymers there may be given:
polystyrene-polybutadiene-polystyrene (SBS)
polystyrene-polyisoprene-polystyrene (SIS)
poly(alpha-methylstyrene)-polybutadiene-poly(alpha-methylstyrene) and
poly(alpha-methylstyrene)-polyisoprene-poly(alpha-methylstyrene).

A particularly preferred class of such triblock copolymers are available commercially as Cariflex®, Kraton D® and Kraton G® from Shell.

A third class of modifier resins suitable for use in the instant invention are those derived from conjugated dienes. While many copolymers containing conjugated dienes have been discussed above, additional conjugated diene modifier resins include for example homopolymers and copolymers of one or more conjugated dienes including for example polybutadiene, butadiene-styrene copolymers, isoprene-isobutylene copolymers, chlorobutadiene polymers, butadiene-acrylonitrile copolymers, polyisoprene. Finally, ethylene-propylene-diene monomer rubbers are also intended to be within the full scope of the present invention. These EPDMs are typified as comprising predominately ethylene units, a moderate amount of propylene units and only a minor amount, up to about 20 mole % of diene monomer units. Many such EPDM's and processes for the production thereof are disclosed in U.S.—A—2,933,480; 3,000,866; 3,407,158; 3,093,621 and 3,379,701.

An additional group of modifier resins employable in the instant invention are the core-shell type graft copolymers. In general, these are characterized as having a predominately conjugated diene rubbery core or a predominately cross-linked acrylate rubbery core and one or more shells polymerized thereon and derived from monoalkenyl arene and/or acrylic monomers alone or, preferably, in combination with other vinyl monomers. Such core-shell copolymers are widely available commercially, for example, from Rohm and Haas Company under the tradenames KM-611®, KM-653® and KM-330®, and are described in U.S.—A—3,808,180; 4,034,013; 4,096,202; 4,180,494 and 4,292,233.

Also within the scope of the present invention are the core-shell copolymers wherein an interpenetrating network of the resins employed characterizes the interface between the core and shell. Especially preferred in this regard are the ASA type copolymers available from General Electric Company and sold as Geloy® resin and described in U.S.—A—3,944,631.

It is also to be understood that in addition to the straight polymers and copolymers described above, there may be employed such polymers and copolymers having copolymerized therewith or grafted thereon monomers having functional groups and/or polar or active groups. Such functionalized or activated polymers and copolymers are described in the references cited above with respect to the discussion on toughened polyamides. All of such functionalized or activated polymers and copolymers may be directly blended with the ingredients to the present compositions or, as described above, may be precompounded with a polyamide or polyphenylene ether. Finally, other suitable modifier resins and high molecular weight rubbery materials which may be employed in the practice of the present invention include for example thiokol rubber, polysulfide rubber, polyurethane rubber, polyether rubber (e.g. polypropylene oxide), epichlorhydric rubber, ethylene propylene rubber, thermoplastic polyester elastomers, thermoplastic ether-ester elastomers.

The amount of the rubbery polymer used will be up to about 100 parts by weight, preferably from 5 to 50 parts by weight based on 100 parts by weight of a mixture of polyphenylene ether and polyamide. However, when the amount is less than 2 parts by weight, the effect of the rubbery polymer to improve impact resistance is poor. When the amount is more than 100 parts by weight, the impact resistance is much improved, however, some loss of other physical properties may result. Thus, in the interest of balancing impact resistance and other physical properties, it is preferred to use less than 100 parts by weight of the rubbery polymer. It is also to be understood that combinations of the above-mentioned modifier resins may be employed and are within the full intended scope of the present invention.

Finally, in addition to the foregoing, the polyphenylene ether-polyamide resin compositions of the present invention may further comprise other reinforcing additives, including glass fibers, carbon fibers, mineral fillers and the like as well as various flame retardants, colorants, stabilizers and the like known to those skilled in the art.

When employed in the practice of the present invention, reinforcing additives should be used in an amount up to no more than about 50 wt % based on the total composition, preferably no more than about 30 wt %. Especially preferred reinforcing additives are the filamentous and chopped glass fibers. Such glass fibers may be untreated or, preferably, treated with a silane or titanate coupling agent, and are well known in the art and widely available from a number of manufacturers.

Suitable stabilizers for use in the practice of the present invention generally include most any of the known thermal and oxidative stabilizers suitable for use with either polyamides or polyphenylene ethers. Especially preferred are those stabilizers suitable for use with polyamides. For example, liquid phosphates and hindered phenols may be employed as well as stabilizer packages encompassing combinations of hindered phenols and potassium and cuprous salts.

The method for producing the resin compositions of the present invention is not particularly limited, and the conventional methods are satisfactorily employed. Generally, however, melt blending methods are desirable. The time and temperature required for melt-blending are not particularly limited, and they can properly be determined according to the composition of the material. The temperature varies somewhat with the blending ratio of the polyphenylene ether to polyamide, but it is generally within a range of 270° to 350°C. A prolonged time and/or a high shear rate is desirable for mixing, but the deterioration of the resin composition advances. Consequently, the time needs to be determined taking into account these points.

Any of the melt-blending methods may be used, if it can handle a molten viscous mass. The method may be applied in either a batchwise form or a continuous form. Specifically, extruders, Bambury mixers, rollers, kneaders and the like may be exemplified.

While all ingredients may be initially and directly added to the processing system, applicants have surprisingly found that the physical properties of the composition, particularly impact strength and elongation, are greatly enhanced by initially precompounding one of the polymer resins, preferably the polyphenylene ether, with the polycarboxylic acid prior to blending with the other polymer. Such precompounding may be one in two steps wherein the polycarboxylic acid and the polyphenylene ether are melt extruded to form pellets which are then blended through extrusion with the polyamide or one can employ an extrusion apparatus or melt blending apparatus wherein the polyphenylene ether and polycarboxylic acid are fed at the throat of the screw and the polyamide is subsequently added to the extrusion system in a downstream feed port. In this latter method, the polycarboxylic acid and polyphenylene ether are melt blended and in a molten state when the polyamide is added.

With respect to the other ingredients of the compositions, all ingredients may be directly added to the processing system or certain additives may be precompounded with each other or either polymer product blending with the other polymer. For example, as discussed above, impact modifier or toughening agents may be precompounded with a polyamide to form a super tough polyamide. Alternatively, the polyphenylene ether may be precompounded with the rubber polymer or other additional resin and the polycarboxylic acid and subsequently compounded with the polyamide. Furthermore, the amine compound, if used, may be premixed and/or reacted with a polycarboxylic acid and precompounded with a polyphenylene ether prior to compounding with a polyamide. In essence, any system of precompounding

may be employed in the practice of the present invention; however, the tremendous and unexpected improvement and physical properties is most apparent when at a minimum the polycarboxylic acid is precompounded with the polyphenylene ether. While the polycarboxylic acid may be precompounded with a polyamide, the enhancement and physical properties is not as great.

The following examples are presented in order that those skilled in the art may better understand how to practice the present invention. Unless otherwise stated, all formulations are expressed in terms of parts by weight.

Examples 1 and 2

A series of polyphenylene ether-polyamide compositions within and outside of the scope of the present invention were prepared. All compositions were prepared on a single screw extruder by direct addition of ingredients and extruded at 300°C. The specific composition and the physical properties thereof are shown in Table 1.

TABLE 1

| Example | A | 1 | 2 |
|---|---|---|---|
| Polyphenylene ether[a] | 70 | 70 | 70 |
| Polyamide 6,6[b] | 30 | 30 | 30 |
| Citric acid (anhydrous) | — | 1.0 | — |
| Malic acid | — | — | 1.0 |
| Unnotched Izod (ft-lbs/in)<br>(J/cm) | 2.8<br>(1.49) | 16.7<br>(8.91) | 8.5<br>(4.53) |

[a] Poly(2,6-dimethyl-1,4-phenylene)ether produced by General Electric Company.
[b] Polyamide 6,6 from duPont.

As seen from Example 1 and 2 and Comparative Example A, the addition of the polycarboxylic acid to the polyphenylene ether-polyamide composition greatly improved the physical properties of such blends as demonstrated by the higher impact strength. Additionally, the compositions were found to have good compatibility as parts molded from these compositions were devoid of streaks and or delamination which are often associated with incompatibility. The compositions within the scope of the invention were also found to have improved elongation, processability and chemical resistance.

Examples 3—6

A second series of examples were prepared demonstrating the applicability of the present invention to rubber modified polyphenylene ether-polyamide blends. These examples were prepared on a twin screw extruder at about 575°F (302°C). The specific compositions of these examples as well as the physical properties thereof were as shown in Table 2.

TABLE 2

| | B | 3 | 4 | 5 | 6 |
|---|---|---|---|---|---|
| Polyphenylene ether[a] | 49 | 49 | 49 | 49 | 49 |
| Polyamide 6,6[b] | 41 | 41 | 41 | 41 | 41 |
| Citric acid (anhydrous) | — | 0.1 | 0.25 | 0.5 | — |
| Malic acid | — | — | — | — | 0.25 |
| SEBS[c] | 10 | 10 | 10 | 10 | 10 |
| Gardner Impact (in-lbs)<br>(J) | 18<br>(2.03) | >320<br>(>36.15) | >320<br>(>36.15) | 184<br>(20.79) | >320<br>(>36.15) |
| Notched Izod (ft-lb/in)<br>(J/cm) | 0.8<br>(0.43) | 3.0<br>(1.60) | 2.6<br>(1.38) | 1.5<br>(0.80) | 2.4<br>(1.28) |
| % Tensile elongation | 8 | 25 | 33 | 15 | 31 |

[a] Poly(2,6-dimethyl-1,4-phenylene)ether from General Electric Company.
[b] Polyamide 6,6 from duPont.
[c] Styrene hydrogenated polybutadiene styrene triblock copolymer from Shell.

The results shown in Table 2 clearly demonstrate the benefit and effectiveness of the polycarboxylic acid in the rubber modified polyphenylene ether-polyamide blends. Additionally, parts prepared from the composition within the scope of the present invention were free of streaks and/or delamination.

Example 7

Two blends of 70% by wt polyphenylene ether and 30% polyamide 6 were prepared, one with 0.5 phr citric acid and the other without any polycarboxylic acid modifier/compatibilizer. The unnotched Izod Impact strengths of the latter was only 2.6 ft-lbs/in (1.38 J/cm) whereas the unnotched Izod Impact strength of the composition according to the invention increased to 3.2 ft-lbs/in (1.71 J/cm). This composition also demonstrated improvement of other physical properties including for example tensile elongation.

Examples 8—10

A series of polyphenylene ether-polyamide compositions within and outside of the scope of the present invention were prepared. All compositions were prepared on a twin screw extruder by direct addition of ingredients and extruded at approximately 285°C under vacuum at a screw speed of 250 rpm. The specific compositions the physical properties thereof are shown in Table 3.

TABLE 3

| Example | C | 8 | 9 | 10 |
|---|---|---|---|---|
| Polyphenylene ether[a] | 50 | 50 | 50 | 50 |
| Polyamide 6,6[b] | — | — | 50 | — |
| Polyamide 6,6[c] | 50 | 50 | — | — |
| Polyamide 6,6[d] | — | — | — | 50 |
| Citric acid (anhydrous) | | 1 | 1 | 1 |
| Notched Izod (ft-lb/in)<br>(J/cm) | .5<br>(0.26) | 1.0<br>(0.53) | 1.1<br>(0.58) | 1.0<br>(0.53) |
| Unnotched Izod (ft-lb/in)<br>(J/cm) | 10*<br>(5.33) | >11.7<br>(>6.24) | >11.7<br>(>6.24) | >11.7<br>(>6.24) |
| Tensile yield strength (psi)$\times 10^3$<br>(MPa) | 10.8<br>(74.46) | 11.0<br>(75.84) | 11.2<br>(77.22) | 11.0<br>(75.84) |
| Tensile elongation (%) | 7 | 24 | 31.5 | 21 |

[a] Polyphenylene ether from General Electric Company.
[b] Fabenyl® 45 APBH and R600, respectively from Tubize Polymers SA, Belgium.
[c] Fabenyl® 45 APBH and R600, respectively from Tubize Polymers SA, Belgium.
[d] Polyamide 6,6 from du Pont.
* One out of six bars shows a value >11.7 (>6.24).

These examples demonstrate the improved physical properties associated with the use of citric acid in polyphenylene ether-polyamide blends. Specifically, these compositions demonstrated improved compatibility, notched and unnotched izod impact strength, tensile yield strength and elongation as compared to the unmodified composition.

Examples 11—17

Several compositions were prepared on a twin screw extruder at 285°C with a screw speed of 300 rpm above. These compositions further demonstrate the applicability of the invention to rubber modified as well as stabilized and pigmented compositions, at various levels of the polycarboxylic acid additive. The compositions and properties thereof are shown in Table 4. All amounts are in parts by weight.

Once again these examples demonstrate the excellent properties obtained by the compositions of the present invention. As seen in Examples 13 and 14, the loss of impact strength by incorporating the stabilizer additive can be overcome by increasing the amount of polycarboxylic acid. The same is also true for compositions incorporating therein $TiO_2$ pigment. In general, these compositions had improved physical properties as well as compatibility as evidenced by the lack of streaks and/or delamination in molded parts.

TABLE 4

| Example | D | 11 | 12 | 13 | 14 | 15 | 16 | 17 |
|---|---|---|---|---|---|---|---|---|
| Polyphenylene ether[a] | 45 | 45 | 45 | 45 | 45 | 45 | 45 | 45 |
| Polyamide 6,6[b] | 45 | 45 | 45 | 45 | 45 | 45 | 45 | 45 |
| Citric acid-1-hydrate | | 0.35 | 0.7 | 0.35 | 0.7 | 0.35 | 0.7 | 0.35 |
| Phosphite stabilizer | | | | 1 | 1 | | | 1 |
| $TiO_2$ | | | | | 5 | 5 | 5 | |
| SBS[c] | 10 | 10 | 10 | 10 | 10 | 10 | 10 | 10 |
| Unnotched Izod (ft-lb/in)<br>(J/cm) | | 5.3 (4)<br>(2.83) | 6.0 (5)<br>(3.20) | 2.4 (0)<br>(1.28) | 4.3 (3)<br>(2.29) | 3.6 (0)<br>(1.92) | 4.7 (2)<br>(2.51) | 1.9 (0)<br>(1.01) |
| Falling dart impact (ft-lb)<br>(J) | 14<br>(1.58) | 162 (4)<br>(18.30) | >162 (4)<br>(>18.30) | 49 (0)<br>(5.53) | 146 (2)<br>(16.49) | 84 (0)<br>(9.49) | 213 (2)<br>(24.06) | 30 (0)<br>(3.39) |
| Tensile yield strength (psi×$10^3$)<br>(MPa) | 7.5<br>(51.71) | 8.4<br>(57.91) | 8.5<br>(58.60) | 8.7<br>(59.98) | 8.4<br>(57.91) | 8.5<br>(58.60) | 8.6<br>(59.29) | 8.5<br>(58.60) |
| Tensile elongation (%) | 9.2 | 49.7 | 57.1 | 17.3 | 45.9 | 30.1 | 40.7 | 12.2 |

[a] Poly(2,6-dimethyl-1,4-phenylene)ether from General Electric Company.
[b] Fabenyl® 45 APBH, water content of 0.3—0.4.
[c] Styrene-butadiene-styrene triblock copolymer, Cariflex/Kraton®D from Shell.
* Numbers in parenthesis represent the number of test parts out of five tested that did not break at 162 ft-lbs (18.30 J).

Examples 18—21

Compositions in accordance with the present invention were prepared on a twin screw extruder at 295°C and screw speed 250 rpm. These compositions further comprised an amine compound with and without a phosphite stabilizer. The compositions and the properties thereof are shown in Table 5.

As these examples demonstrate, excellent physical properties are attained by these compositions.

TABLE 5

| Example | E | 18 | 19 | 20 | 21 |
|---|---|---|---|---|---|
| Polyphenylene ether[a] | 50 | 50 | 50 | 50 | 50 |
| Polyamide 6,6[b] | 50 | 50 | 50 | 50 | 50 |
| Citric acid-1-hydrate | | 0.7 | 0.7 | 0.7 | 0.7 |
| Phosphite stabilizer | | — | 0.35 | — | — |
| Dibutylamine | | — | 0.35 | 0.35 | 0.7 |
| Notched Izod (ft-lb/in)<br>(J/cm) | 0.69<br>(0.37) | 1.23<br>(0.65) | 1.0<br>(0.53) | 1.2<br>(0.64) | 1.0<br>(0.53) |
| Unnotched Izod (ft-lb/in)*<br>(J/cm) | | 11.7 (3)<br>(6.24) | 9.7 (0)<br>(5.18) | 7.0 (1)<br>(3.73) | 11.6 (0)<br>(6.19) |
| Tensile yield strength ($\times 10^3$ psi)<br>(MPa) | 7.8<br>(53.77) | 10.9<br>(75.15) | 10.2<br>(70.35) | 10.8<br>(74.46) | 10.1<br>(69.63) |
| Elongation % | 5.5 | 19.7 | 10.7 | 14.7 | 20.8 |

[a] Polyphenylene ether from General Electric Company.
[b] Fabenyl® 45 APBH from Tubize Polymers S.A. Belgium.
* Number in parenthesis represents the number of non-broken bars out of six tested that did not break at 11.7 ft-lbs (6.24 J).

Example 22

Two examples of polyphenylene ether-polyamide compositions within and outside the scope of the present invention were prepared on a twin screw extruder at 285°C and screw speed of 200 rpm. The specific compositions and physical properties thereof are shown in Table 6.

These examples further demonstrate the applicability of the present invention to other polycarboxylic acids, specifically malic acid.

TABLE 6

| Example | F | 22 |
|---|---|---|
| Polyphenylene ether[a] | 50 | 50 |
| Polyamide 6,6[b] | 50 | 50 |
| Malic acid | | 1 |
| Notched Izod (ft-lb/in)<br>(J/cm) | .69<br>(0.37) | .71<br>(0.38) |
| Tensile yield strength $\times 10^3$ psi<br>(MPa) | 7.8<br>(53.77) | 8.2<br>(56.33) |
| Tensile elongation (%) | 5.5 | 6.5 |

[a and b] See footnotes Table 3.

Examples 23—25

Several additional examples were prepared demonstrating various other polycarboxylic acid modifiers employable in the practice of the instant invention. The mono-stearyl citrate employed is from Pfizer

Chemicals and actually comprises a 22/78 mixture of the mono- and di- stearyl esters of citric acid. Acetyl citric acid was prepared inhouse by allowing acetyl chloride to react with the hydroxy group of the citric acid. The carboxylic acid salt, calcium malate, was obtained from Pfaltz-Bauer. The results obtained with these polycarboxylic acids and derivatives were as shown in Table 7.

TABLE 7

| Example | G | 23 | 24 | 25 |
|---|---|---|---|---|
| Polyphenylene ether[a] | 70 | 70 | 70 | 70 |
| Polyamide 6,6[b] | 30 | 30 | 30 | 30 |
| Monostearyl citrate | — | 1.12 | — | — |
| Acetyl citric acid | — | — | 0.5 | — |
| Calcium malate | — | — | — | 0.5 |
| Unnotched Izod (ft-lb/in) (J/cm) | 2.8 (1.49) | 4.1 (2.19) | 6.9 (3.68) | 6.9 (3.68) |

[a and b] See footnotes Table 3.

Examples 26—32

An additional series of examples were prepared, this time demonstrating the utility of various acid-amides, in the present invention. The acid-amides were prepared by dissolving the respect acid in tetrahydrofuran (THF) and then adding in a drop wise fashion the amine while constantly stirring. Depending upon the amine employed, the formed acid-amides precipitated out or formed a highly viscous solution. In the former case, the precipitate was filtered, washed with clear THF and dried in a vacuum-oven. In the latter case, THF was removed by rotary-evaporation and the remaining paste dried in a vacuum-oven and the product crystallized. The specific reactants and ratios thereof employed and the products obtained were as shown in Table 8.

These acid-amides were then used, on an equimolar basis, except in the case of the malic acid based examples, in accordance with the present invention to demonstrate their effectiveness as property enhancers. The compositions and the properties obtained were as shown in Tables 9 and 10. From Tables 9 and 10 it is apparent that acid-amides derived from amines having 6 or less carbon atoms are preferred. While acid-amides prepared from amines having more than 6 carbon atoms appear to have little or no effect on physical properties, some improvement in the color of the resultant resin was noticed.

TABLE 8

| Amine | Polycarboxylic acid | Ratio of amine/acid | Reaction product | Precipitate formation (A/B)[c] |
|---|---|---|---|---|
| Diethylamine | Citric acid-1-hydrate | 1:1 | N,N′-diethyl citric acid amide | A |
| Propylamine | Citric acid-1-hydrate | 2:1 | N,N′-dipropyl citric acid amide | A |
| Aniline[a] | Citric acid-1-hydrate | 1:1 | N-phenyl citric acid amide | B |
| Dodecylamine | Citric acid-1-hydrate | 1:1 | N-dodecyl citric acid amide | B |
| Dodecylamine | Citric acid-1-hydrate[b] | 2:1 | N,N′-didodecyl citric acid amide | B |
| Dodecylamine | d,l-malic acid[b] | 1:1 | N-dodecyl malic acid amide | B |

[a] Purified by vacuum distillation (Fischer Spalt Rohr system).
[b] Citric acid/malic acid dissolved at T=55°C; reaction also carried out at this temperature.
[c] A—highly viscous slurry formed; B—precipitate formed.

TABLE 9

| Example | 26 | 27 | 28 | 29 | 30 |
|---|---|---|---|---|---|
| Polyphenylene ether[a] | 50 | 50 | 50 | 50 | 50 |
| Polyamide 6,6[b] | 50 | 50 | 50 | 50 | 50 |
| Citric acid-1-hydrate | 0.7 | — | — | — | — |
| N-phenyl citric acid amide | — | 0.85 | — | — | — |
| N-dodecyl citric acid amide | — | — | 1.2 | — | — |
| N,N′-didodecyl citric acid amide | — | — | — | 1.84 | — |
| N,N′-diethyl citric acid amide | — | — | — | — | 0.825 |
| N,N′-dipropyl citric acid amide[c] | — | — | — | — | — |
| Unnotched Izod (ft-lb/in)<br>(J/cm) | >23.4<br>(>12.49) | >23.4<br>(>12.49) | 6.74<br>(3.59) | 4.12<br>(2.20) | >23.4<br>(>12.49) |
| Notched Izod (ft-lb/in)<br>(J/cm) | 1.09<br>(0.58) | .94<br>(0.50) | .64<br>(0.34) | .67<br>(0.357) | .81<br>(0.43) |
| Tensile yield strength psi<br>(kPa) | 11063<br>(76,276) | 11165<br>(76979) | 8845<br>(60983) | 7685<br>(52985) | 10875<br>(74979) |
| Tensile elongation, % | 23 | 8.5 | 5 | 4.5 | 10 |

[a and b] See footnotes a&b, Table 3.
[c] This acid amide was not tested.

TABLE 10

| Example | H | 31 | 32 |
|---|---|---|---|
| Polyphenylene ether[a] | 50 | 50 | 50 |
| Polyamide 6,6[b] | 50 | 50 | 50 |
| Malic acid | — | 0.5 | — |
| N-dodecyl malic acid amide | — | — | 0.5 |
| Unnotched Izod, (ft-lb/in)<br>(J/cm) | 11.05<br>(5.89) | 16.57<br>(8.84) | 7.06<br>(3.77) |
| Notched Izod, (ft-lb/in)<br>(J/cm) | .75<br>(0.40) | .94<br>(0.50) | .70<br>(0.37) |
| Tensile yield strength psi<br>(kPa) | 8076<br>(55681) | 10657<br>(73476) | 8642<br>(59583) |
| Tensile elongation % | 7.75 | 19.5 | 8.0 |

[a and b] See Table 9.

Examples 33—45

Two series of compositions were prepared in order to further demonstrate the breadth of the present invention. In these examples, various polyamides were evaluated alone and in combination with an additional modifier resin.

The specific formulations and the physical properties of these compositions were as shown in Table 11 and 12.

TABLE 11

| Example | I | 33 | J | 34 | K | 35 |
|---|---|---|---|---|---|---|
| Polyphenylene ether[a] | 50 | 50 | 49 | 49 | 50 | 50 |
| Polyamide 6[b] | 50 | 50 | 41 | 41 | — | — |
| Polyamide 12[c] | — | — | — | — | 50 | 50 |
| Citric acid (anhydrous) | — | 0.5 | — | 0.5 | — | 0.5 |
| SEBS[d] | — | — | 10 | 10 | — | — |
| Unnotched Izod impact strength (ft-lb/in) (J/cm) | 2.7 (1.44) | 5.9 (3.15) | 7.0 (3.73) | >38.0 (>20.28) | 3.7 (1.97) | 4.3 (2.29) |
| Tensile elongation, % | — | — | 4.1 | 37.0 | — | — |

[a] See footnote a Table 2.
[b] From Nylon Corporation of America.
[c] From Hules.
[d] Styrene hydrogenated butadiene styrene triblock copolymer from Shell.

TABLE 12

| Example | Polyamide | Amount | PPE[a] | CAH[b] | SEBS[c] | Notched Izod (ft-lb/in) (J/cm) | Tensile elongation % |
|---|---|---|---|---|---|---|---|
| L | Polyamide 6,12 | 45 | 45 | — | 10 | 0.6 (0.32) | 6 |
| 36 | Polyamide 6,12 | 45 | 45 | 0.7 | 10 | 2.5 (1.33) | 30 |
| M | Polyamide 6/ | 45 | 45 | — | 10 | 1.2 (0.64) | 10 |
| 37 | polyamide 6,6 copolymer | 45 | 45 | 0.7 | 10 | 4.1 (2.19) | 30 |
| N | Polyamide 12 | 45 | 45 | — | 10 | 0.3 (0.16) | 4 |
| 38 | Polyamide 12 | 45 | 45 | 0.6 | 10 | 0.9 (0.48) | 14 |
| O | Polyamide 6 | 45 | 45 | — | 10 | 0.3 (0.16) | 4 |
| 39 | Polyamide 6 | 45 | 45 | 0.6 | 10 | 2.4 (1.28) | 30 |
| P | Polyamide 6,6 | 45 | 45 | — | 10 | 0.6 (0.32) | 5 |
| 40 | Polyamide 6,6 | 45 | 45 | 0.6 | 10 | 3.1 (1.65) | 38 |
| Q | Polyamide 6,6 | 67.5 | 22.5 | — | 10 | 0.8 (0.43) | 22 |
| 41 | Polyamide 6,6 | 67.5 | 22.5 | 0.5 | 10 | 2.2 (1.17) | 32 |
| R | Polyamide 4,6 | 45 | 45 | — | 10 | 0.6 (0.32) | 4 |
| 42 | Polyamide 4,6 | 45 | 45 | 0.6 | 10 | 4.5 (2.40) | 43 |
| S | Polyamide 4,6 | 50 | 50 | — | — | 0.5 (0.26) | 3 |
| 43 | Polyamide 4,6 | 50 | 50 | 0.6 | — | 1.0 (0.53) | 20 |
| T | Polyamide 4,6 | 41 | 49 | — | 10 | 0.3 (0.16) | 2 |
| 44 | Polyamide 4,6 | 41 | 49 | 0.5 | 10 | 4.0 (2.13) | 24 |
| U | Polyamide 6,I | 41 | 49 | — | 10 | 0.5 (0.26) | 4 |
| 45 | Polyamide 6,I | 41 | 49 | 0.6 | 10 | 4.1 (2.19) | 12 |

[a] See footnote a Table 1. [b] Citric acid-1-hydrate. [c] Styrene-hydrogenated butadiene-styrene block copolymers.

Examples 46—67

A series of examples were prepared in order to further demonstrate the breadth of the present invention as claimed. In this series of examples, various modifier resins known in the art to modify polyamides or polyphenylene ethers for improved physical properties, especially impact strength, and/or processability were demonstrated. The various modifier resins employed in these examples were as follows:

Surlyn® 9910 and 1706—ionomer resins from E. I. duPont.

Primacor® 3440—ethylene-comonomer acid (heat stable EAA) from Dow Chemical.

IM 7200®—ethylene-propylene rubber/ethylene-propylene-diene monomer rubber from Uniroyal.

IM 7565®—ethylene-propylene-diene monomer rubber/high density polyethylene from Uniroyal®.

LDPE—low density polyethylene from U.S. Industrial Chemicals.

Stereon®—styrene butadiene copolymer from Firestone®.

Paracril®—butadiene acrylonitrile copolymer from Uniroyal®.

HIPS—high impact polystyrene from American Hoechst.

EPRgAA—acrylic acid grafted ethylene propylene rubber from Reichold.

PEgMA—maleic anhydride grafted polyethylene made in accordance with U.S.—A—4,147,740 having 0.75 wt percent anhydride.

CXA® E136—modified ethylene vinyl acetate from E. I. duPont.

EPDMgGMA—glycidyl methacrylate grafted EPDM rubber from Copolymers Rubber and Chemical Corp..

The specific compositions of each example and the physical properties thereof were as shown in Table 13.

TABLE 13

| Example | Modifier resin | Amt. | PPE[a] | PA6,6[b] | SEBS[c] | CA[d] | Notched Izod (ft-lb/in) (J/cm) | Tensile elongation, % |
|---|---|---|---|---|---|---|---|---|
| 46 | Surlyn® 1706 | 5 | 49 | 41 | 5 | 0.6 | 0.7 (0.37) | 29 |
| 47 | Surlyn® 9910 | 5 | 49 | 41 | 5 | 0.5 | 2.1 (1.12) | 22 |
| 48 | Primacor® 3440 | 5 | 49 | 41 | 5 | 0.5 | 1.6 (0.85) | 19 |
| 49 | Primacor® 3440 | 10 | 36 | 54 | 10 | 0.5 | 1.1 (0.58) | 15 |
| 50 | IM 7200® | 10 | 49 | 41 | — | 0.5 | 1.0 (0.53) | 16 |
| 51 | IM 7565® | 10 | 49 | 41 | — | 0.5 | 2.0 (1.06) | 22 |
| 52 | LDPE | 10 | 49 | 41 | — | 0.5 | 1.5 (0.80) | 14 |
| V | Stereon® | 10 | 49 | 41 | — | — | 0.2 (0.10) | 4 |
| 53 | Stereon® | 10 | 49 | 41 | — | 0.5 | 1.9 (1.01) | 46 |
| 54 | Paracril® | 10 | 49 | 41 | — | 0.5 | 0.8 (0.43) | 15 |
| 55 | HIPS | 9 | 42 | 40 | 9 | 0.5 | 2.0 (1.06) | 22 |
| 56 | HIPS | 10 | 49 | 41 | — | 0.5 | 0.8 (0.43) | 14 |
| 57 | HIPS | 15 | 44 | 41 | — | 0.5 | 0.8 (0.43) | 9 |

TABLE 13 (contd.)

| Example | Modifier resin | Amt. | PPE[a] | PA6,6[b] | SEBS[c] | CA[d] | Notched Izod (ft-lb/in) (J/cm) | Tensile elongation, % |
|---|---|---|---|---|---|---|---|---|
| W | HIPS | 20 | 40 | 40 | — | — | 4.2 (2.24) | 2.3 |
| 58 | HIPS | 20 | 40 | 40 | — | 0.5 | 8.6 (4.59) | 3.4 |
| 59 | EPRgAA | 7 | 49 | 41 | 10 | 0.75 | 1.5 (0.80) | 25 |
| X | PEgMA | 10 | 36 | 54 | 10 | — | 0.7 (0.37) | 9 |
| 60 | PEgMA | 10 | 36 | 54 | 10 | 0.5 | 4.0 (2.13) | 41 |
| 61 | PEgMA | 5 | 36 | 54 | 10 | 0.5 | 4.1 (2.19) | 44 |
| 62 | PEgMA | 5 | 41 | 49 | 5 | 0.6 | 2.2 (1.17) | 33 |
| 63 | PEgMA | 10 | 41 | 49 | 5 | 0.6 | 1.1 (0.58) | 27 |
| 64 | PEgMA | 10 | 60 | 40 | 5 | 0.6 | 3.5 (1.87) | 36 |
| 65 | CXA E136® | 10 | 36 | 54 | 10 | 0.5 | 2.6 (1.39) | 38 |
| Y | EPDMgGMA | 10 | 45 | 45 | — | — | 0.7 (0.37) | 4 |
| 66 | EPDMgGMA | 10 | 45 | 45 | — | 0.7 | 1.4 (0.75) | 13 |
| 67 | EPDMgGMA | 5 | 45 | 45 | 5 | 0.7 | 2.6 (1.39) | 26 |

[a and b] See footnotes a&b, Table 2.
[c] See footnote d Table 7.
[d] Citric acid (anhydrous).

Examples 68—70

Several additional compositions were prepared demonstrating various embodiments of the present invention. Specifically, these examples demonstrate filled compositions, compositions prepared with combinations of polyamides and super tough polyamides. The specific compositions and the properties obtained were as shown in Table 14.

Examples 69 and 70 were prepared by precompounding the polyphenylene ether with citric acid and adding the super tough polyamide and glass fiber and polyamide, respectively, through an entry port to the extruder barrel downstream from the initial feed.

TABLE 14

| Example | 68 | Z | 69* | 70* |
|---|---|---|---|---|
| Polyphenylene ether[a] | 49 | 49 | 50 | 30 |
| Polyamide 6[b] | 22.5 | 22.5 | — | — |
| Polyamide 6,6[c] | 22.5 | 22.5 | — | 40 |
| Zytel ST 801[d] | — | — | 50 | — |
| Citric acid (anhydrous) | 0.5 | — | — | 0.5 |
| Citric acid-1-hydrate | — | — | 0.75 | — |
| SEBS[e] | 10 | 10 | — | 1 |
| Glass fiber | — | — | — | 30 |
| Stabilizer[f] | — | — | — | 0.3 |
| Notched Izod (ft-lb/in)<br>(J/cm) | 3.5<br>(1.87) | 0.2<br>(0.10) | 3.75<br>(2.00) | 1.7<br>(0.91) |
| Tensile elongation, % | 31 | 2 | 35.5 | 7.1 |
| Falling dart (ft-lb)<br>(J) | — | — | 31.7<br>(3.58) | — |
| Tensile yield strength psi<br>(kPa) | — | — | 8076<br>(55.68) | 21885<br>(150890) |

[a] See footnote a Table 2.
[b] Polyamide from duPont.
[c] Polyamides from duPont.
[d] Super tough, modified polyamide from duPont.
[e] See footnote c Table 2.
[f] Stabilizer package containing hindered phenol antioxidant and potassium and cuprous salts as heat stabilizers.
* Prepared by precompounding (see text).

Examples 71—79

Various polyphenylene ether-polyamide compositions were prepared in accordance with the improved process of the present invention. Specifically, examples within and outside the scope of the present invention were prepared by directly compounding all of the ingredients. Examples within the scope of the improved process of the present invention were prepared by precompounding the polycarboxylic acid, alone or in combination with an amine and/or modifier resin, and subsequently compounded with the polyamide. The specific formulations and the properties obtained with each are presented in Table 1.

Table 15 embodies various compositions within and beyond the scope of the present invention wherein malic acid comprises the polycarboxylic acid component. Comparative Example AA and Examples 71 and 72 demonstrates that while a high level of dibutylamine with malic acid reduces impact strength in the compatibilized composition the same composition wherein the malic acid and dibutylamine and polyphenylene ether are precompounded surprisingly enhances impact strength as well as elongation and tensile yield strength. Example 73 demonstrates precompounding of the polycarboxylic acid amine stabilizer and styrene-butadiene-styrene triblock copolymer with the polyphenylene ether before blending with polyamide.

Similarly, Table 16 demonstrates once again the utility and the improvement in precompounding citric acid alone or in combination with the modifier resin or modifier resin combination prior to compounding with the polyamide. The improvement is made clear by comparison of Comparative Examples CC with Examples 74 and 75 as well as comparison of Examples 77 through 79. In Examples 75 and 76 the precompound compositions were fed into the extruder as ground particles or unground granules, respectively.

TABLE 15

| Example | AA | 71 | 72 | BB | 73 |
|---|---|---|---|---|---|
| Polyphenylene ether[a] | 50 | 50 | — | 45 | — |
| Polyamide 6,6[b] | — | — | — | 45 | 41 |
| Polyamide 6,6[c] | 50 | 50 | 50 | — | — |
| d,l-Malic acid | — | 1 | — | — | — |
| Dibutylamine | — | 1 | — | — | — |
| SBS[d] | — | — | — | 10 | — |
| Precompound A[e] | — | — | 51 | — | — |
| Precompound B[f] | — | — | — | — | 61 |
| $TiO_2$ | — | — | — | — | 5 |
| Notched Izod (ft-lb/in)<br>(J/cm) | .64<br>(0.34) | .58<br>(0.31) | .88<br>(0.47) | 1.09<br>(0.58) | 2.4<br>(1.28) |
| Falling dart (ft-lb)<br>(J) | — | — | — | 14<br>(1.58) | 36.9<br>(4.17) |
| Tensile yield strength $\times 10^8$ psi<br>($10^2$ MPa) | 10.6<br>(73.08) | 10.2<br>(70.32) | 11.0<br>(75.84) | 7.5<br>(51.71) | 9.7<br>(66.87) |
| Tensile elongation, % | 6.5 | 6.0 | 23.5 | 9.2 | 16.5 |

[a] See footnote a, b, c, Table 3.
[b] See footnote a, b, c, Table 3.
[c] See footnote a, b, c, Table 3.
[d] See footnote c Table 4.
[e] Precompounded composition of 100 pts polyphenylene ether; 2 pts d,l-malic acid; 1 pt dibutylamine.
[f] Precompounded composition of 49 pts polyphenylene ether; 10 pts styrene-butadiene-styrene triblock copolymer; 1 pt dibutylamine and 1 pt d,l-malic acid.

TABLE 16

| Example | CC | 74 | 75 | 76 | 77 | 78 | 79 |
|---|---|---|---|---|---|---|---|
| Polyphenylene ether[a] | 50 | 49 | 24.5 | 24.5 | 9.5 | — | 39 |
| Polyamide 6,6[b] | 50 | 41 | 41 | 41 | 41 | 41 | 41 |
| Citric acid-1-hydrate | — | 0.7 | — | — | — | — | 0.7 |
| SBS[c] | — | 10 | 10 | 10 | 10 | — | 10 |
| HIPS[d] | — | — | — | — | — | — | 10 |
| Precompound C[e] | — | — | 24.5* | 24.5** | — | — | — |
| Precompound D[f] | — | — | — | — | 39.5 | — | — |
| Precompound E[g] | — | — | — | — | — | 61 | — |
| Stabilizer | — | — | — | — | — | — | 0.3 |
| Notched Izod, (ft-lb/in) (J/cm) | .69 (0.37) | 2.9 (1.55) | 4.5 (2.40) | 3.4 (1.81) | 4.2 (2.24) | 3.4 (1.81) | .56 (0.30) |
| Falling dart (ft-lb) (J) | — | 100 (11.29) | 145 (16.38) | 155 (17.51) | 144 (16.27) | 59.7 (6.74) | — |
| Tensile yield strength psi (kPa) | 7815 (53822) | 8395 (57881) | 8743 (60280) | 7641 (52682) | 8511 (58680) | 9367 (64582) | 8134 (56081) |
| Tensile elongation, % | 5.5 | 78 | 45 | 74 | 39 | 24 | 11 |

[a] See respective footnotes Table 4.
[b] See respective footnotes Table 4.
[c] See respective footnotes Table 4.
[d] High impact polystyrene (rubber modified polystyrene).
[e] Precompound composition composed of 100 pts polyphenylene ether, 1 pt citric acid-1-hydrate and 1 pt DPK (liquid phosphate).
[f] Precompound composition composed of 75 pts polyphenylene ether, 25 pts HIPS, and 1 pt citric acid-1-hydrate.
[g] Precompound composition composed of 37 pts polyphenylene ether, 12 pts HIPS, 10 pts SBS and 1 pt citric acid-1-hydrate.
* Ground.
** Granules.

**Claims**

1. A novel resin composition comprising an admixture and/or the reaction product of a) one or more polyphenylene ether resins, b) one or more polyamide resins and c) one or more aliphatic polycarboxylic acid represented by the formula:

$$(R^{I}O)_m R(COOR^{II})_n(CONR^{III}R^{IV})_s$$

or salts thereof wherein R is a linear or branched chain, saturated aliphatic hydrocarbon of from 2 to 20 carbon atoms; $R^{I}$ is selected from the group consisting of hydrogen or an alkyl, aryl, acyl or carbonyl dioxy group of from 1 to 10 carbon atoms; each $R^{II}$ is independently selected from the group consisting of hydrogen or an alkyl or aryl group of from 1 to 20 carbon atoms; each $R^{III}$ and $R^{IV}$ is independently selected from the group consisting of hydrogen or an alkyl or aryl group of from 1 to 10 carbon atoms; m is equal to 1 and (n+s) is greater than or equal to 2, and n and s are each greater than or equal to 0; and wherein $(OR^{I})$ is alpha or beta to a carbonyl group and at least 2 carbonyl groups are separated by 2 to 6 carbon atoms.

2. The composition of Claim 1 wherein the polycarboxylic acid is represented by the formula:

$$(R^{I}O)_m R(COOR^{II})_n(CONR^{III}R^{IV})_s$$

or salts thereof wherein R is a linear or branched chain, saturated aliphatic hydrocarbon of from 2 to 10 carbon atoms; $R^I$ is selected from the group consisting of hydrogen or an alkyl, aryl, acyl or carbonyl dioxy group of from 1 to 6 carbon atoms; each $R^{II}$ is independently selected from the group consisting of hydrogen or an alkyl or aryl group of from 1 to 10 carbon atoms; each $R^{III}$ and $R^{IV}$ is independently selected from the group consisting of hydrogen or an alkyl or aryl group of from 1 to 6 carbon atoms; m is equal to 1 and (n+s) is equal to 2 or 3, and n and s are each greater than or equal to 0 and wherein ($OR^I$) is alpha to the carbonyl group.

3. The composition of Claim 1 wherein the polycarboxylic acid is represented by the formula:

$$(R^IO)_m\ R(COOR^{II})_n$$

or salts thereof wherein R is a linear or branched saturated aliphatic hydrocarbon of 2 to 10 carbon atoms, $R^I$ is selected from the group consisting of hydrogen or an alkyl, acyl or carbonyldioxy group of from 1 to 6 carbon atoms, $R^{II}$ is selected from the group consisting of hydrogen or an alkyl group of from 1 to 20 carbon atoms; m is equal to 1 and n is equal to 2 or 3 and wherein ($OR^I$) is alpha to the carbonyl group.

4. The composition of Claim 1 wherein the polycarboxylic acid is selected from the group consisting of citric acid and malic acid and salts thereof.

5. The composition of Claim 1 wherein the polycarboxylic acid is employed in an amount up to 4% by weight based on the weight of the total composition.

6. The composition of Claim 1 wherein the polycarboxylic acid is employed in an amount of from 0.05 to 4% by weight based on the weight of the total composition.

7. The composition of Claim 1 wherein the amount of the polycarboxylic acid is of from 0.1 to 2% by weight based on the weight of the total composition.

8. The composition of Claim 1 wherein the ratio of polyphenylene ether to polyamide is from 5 to 95% by weight of the former to 95 to 5% by weight of the latter.

9. The composition of Claim 1 wherein the ratio of polyphenylene ether to polyamide is from 30 to 70% by weight of the former to 70 to 30% by weight of the latter.

10. The composition of Claim 1 wherein the polyphenylene ether is a homopolymer or a copolymer having units with the repeating structural formula:

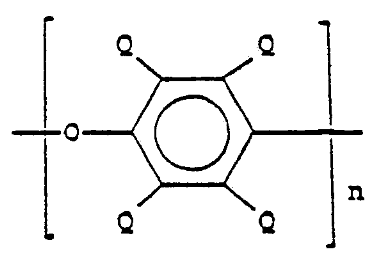

wherein the oxygen ether atom of one unit is connected to the benzene nucleus of the next joining unit, and n is a positive integer and is at least 50, and each Q is independently a monovalent substituent selected from a group consisting of hydrogen, halogen, hydrocarbon and hydrocarbonoxy groups free of a tertiary alpha-carbon atom and halohydrocarbon and halohydrocarbonoxy groups free of a tertiary alpha-carbon atom and having at least 2 carbon atoms between the halogen atom and the phenyl nucleus.

11. The composition of Claim 1 wherein the polyphenylene ether is poly(2,6 dimethyl - 1,4 - phenylene)ether.

12. The composition of Claim 1 wherein the polyamide is selected from the group consisting of polyamide 6; polyamide 6,6; polyamide 12 and polyamide 6/10.

13. The composition of Claim 11 wherein the polyamide is polyamide 6/6.

14. The composition of Claim 11 wherein the polyamide is polyamide 6.

15. The composition of Claim 1 wherein an amine which is either primary or secondary, is used in combination with the polycarboxylic acid.

16. The composition of Claim 15 wherein the amine is dibutylamine.

17. The composition of Claim 15 wherein the amine is present in an amount up to 3% by weight based on the total composition.

18. The composition of Claim 15 wherein the amine is present in an amount from 0.35 to 1% by weight based on the total composition.

19. The composition of Claim 1 which further comprises up to 50% by weight based on the total composition of a modifier resin.

20. The composition of Claim 19 wherein the modifier resin is present in an amount of up to 35% by weight based on the total composition.

21. The composition of Claim 19 wherein the modifier resin is an hydrogenated, partially hydrogenated or non-hydrogenated, styrene-butadiene diblock or styrene-butadiene-styrene triblock copolymer.

22. The composition of Claim 19 wherein the modifier resin is a styrene homopolymer or copolymer.

23. The composition of Claim 19 wherein the modifier resin is a rubber modified high impact polystyrene.

24. The composition of Claim 1 which further comprises up to 50% by weight of glass fiber.

25. The composition of Claim 1 which further comprises up to 30% by weight of glass fiber.

26. The composition of Claim 1 which further comprises at least one additive selected from the group consisting of flame retardants, colorants and stabilizers.

27. The composition of Claim 26 wherein the stabilizer is selected from the group consisting of hindered phenols, phosphite and phosphates, potassium and cuprous salts and combinations thereof.

28. A process for preparing the polyphenylene etherpolyamide compositions according to Claim 1 characterized by admixing one or more polyphenylene ether resins (a), one or more polyamide resins (b) and one or more aliphatic polycarboxylic acid (c).

29. The process of Claim 28 wherein the polyphenylene ether, polyamide and polycarboxylic acid are melt blended.

30. The process of Claim 28 wherein the polycarboxylic acids are those according to Claim 2.

31. The process of Claim 28 wherein the polycarboxylic acids are those according to Claim 3.

32. The process of Claim 28 wherein the polycarboxylic acid is selected from the group consisting of citric acid, malic acid and salts thereof.

33. The process of Claim 28 wherein the polycarboxylic acid is employed in an amount up to 4% by weight based on the weight of the total composition.

34. The process of Claim 28 wherein the property improving amount of the polycarboxylic acid is in amount of from 0.1 to 2% by weight based on the weight of the total composition.

35. The process of Claim 28 wherein the ratio of polyphenylene ether to polyamide is from 5 to 95% by weight of the former to 95 to 5% by weight of the latter.

36. The process of Claim 28 wherein the ratio of polyphenylene ether to polyamide is from 30 to 70% by weight of the former to 70 to 30% by weight of the latter.

37. The process of Claim 28 wherein the polyphenylene ethers are those according to Claim 10.

38. The process of Claim 28 wherein the polyphenylene ether is poly(2,6 - dimethyl - 1,4 - phenylene)ether.

39. The process of Claim 28 wherein the polyamide is selected from the group consisting of polyamide 6; polyamide 6/6; polyamide 12 and polyamide 6/10.

40. The process of Claim 39 wherein the polyamide is polyamide 6/6.

41. The process of Claim 28 which further comprises admixing therewith up to 3% by weight of a primary or secondary amine.

42. The process of Claim 28 which further comprises admixing therewith up to 50% by weight of a modifier resin.

43. The process of Claim 28 which further comprises admixing therewith up to 50% by weight of glass fiber.

44. A process for the preparation of the polyphenylene ether-polyamide compositions according to Claim 1 characterized by precompounding one or more aliphatic polycarboxylic acid (c) with either the polyphenylene ether (a) or the polyamide (b) prior to compounding with the other polymer.

45. The process of Claim 44 wherein the polycarboxylic acid is precompounded with the polyphenylene ether prior to compounding with the polyamide.

46. The process of Claim 44 wherein the polycarboxylic acids are those according to Claim 2.

47. The process of Claim 44 wherein the polycarboxylic acids are those according to Claim 3.

48. The process of Claim 44 wherein the polycarboxylic acid is selected from the group consisting of citric acid, malic acid and salts thereof.

49. The process of Claim 44 wherein the polycarboxylic acid is employed in an amount up to 4% by weight based on the weight of the total composition.

50. The process of Claim 44 wherein the amount of the polycarboxylic acid is from 0.1 to 2% by weight based on the weight of the total composition.

51. The process of Claim 44 wherein the ratio of polyphenylene ether to polyamide is from 5 to 95% by weight of the former to 95 to 5% by weight of the latter.

52. The composition of Claim 44 wherein the ratio of polyphenylene ether to polyamide is from 30 to 70% by weight of the former to 70 to 30% by weight of the latter.

53. The composition of Claim 44 wherein the polyphenylene ethers are those according to Claim 10.

54. The process of Claim 44 wherein the polyphenylene ether is poly(2,6 - dimethyl - 1,4 - phenylene)ether.

55. The process of Claim 44 wherein the polyamide is selected from the group consisting of polyamide 6/10.

56. The process of Claim 44 wherein the polyamide is polyamide 6/6.

57. The process of Claim 44 which further comprises admixing therewith up to 3% by weight of a primary or secondary amine.

58. The process of Claim 57 wherein the amine is precompounded with the polymer resin and the polycarboxylic acid.

59. The process of Claim 57 wherein the amine is prereacted with the polycarboxylic acid prior to precompounding.

60. The process of Claim 44 which further comprises admixing therewith up to 50% by weight of at least one modifier resin.

61. The process of Claim 60 wherein the modifier resin or resins are precompounded with either the polyphenylene ether or the polyamide or both independently.

62. A molded article prepared from the composition according to Claim 1.

63. A molded article prepared from the composition according to Claim 3.

**Patentansprüche**

1. Neue Harzmasse umfassend ein Gemisch und/oder das Reaktionsprodukt von
(a) einem oder mehreren Polyphenylenätherharzen,
(b) einem oder mehreren Polyamidharzen und
(c) einer oder mehreren aliphatischen Polycarbonsäuren der Formel:

$$(R^IO)_mR(COOR^{II})_n(CONR^{III}R^{IV})_s$$

oder deren Salzen, wobei R ein linearer oder verzweigtkettiger, gesättigter aliphatischer Kohlenwasserstoffrest von 2 bis 20 Kohlenstoffatomen ist, $R^I$ ausgewählt ist aus der Gruppe bestehend aus Wasserstoff oder einem Alkyl-, Aryl-, Acyl- oder Carbonyldioxyrest mit 1 bis 10 Kohlenstoffatomen, jedes $R^{II}$ unabhängig ausgewählt ist aus der Gruppe bestehend aus Wasserstoff oder einem Alkyl- oder Arylrest mit 1 bis 20 Kohlenstoffatomen, jedes $R^{III}$ und $R^{IV}$ unabhängig ausgewählt ist aus der Gruppe bestehend aus Wasserstoff oder einem Alkyl- oder Arylrest mit 1 bis 10 Kohlenstoffatomen, m gleich 1 und (n+s) größer als oder gleich 2 ist und n und s jeweils größer oder gleich O sind und $(OR^I)$ in Alpha- oder Beta-Stellung zu einer Carbonylgruppe steht und mindestens zwei Carbonylgruppen durch 2 bis 6 Kohlenstoffatome getrennt sind.

2. Harzmasse nach Anspruch 1, worin die Polycarbonsäure durch die folgende Formel repräsentiert ist:

$$(R^IO)_mR(COOR^{II})_n(CONR^{III}R^{IV})_s$$

oder deren Salze, wobei R ein linearer oder verzweigtkettiger, gesättiger aliphatischer Kohlenwasserstoffrest mit 2 bis 10 Kohlenstoffatomen ist, $R^I$ ausgewählt ist aus der Gruppe bestehend aus Wasserstoff oder einem Alkyl-, Aryl-, Acyl- oder Carbonyldioxyrest mit 1 bis 6 Kohlenstoffatomen, jedes $R^{II}$ unabhängig ausgewählt ist aus der Gruppe bestehend aus Wasserstoff oder einem Alkyl- oder Arylrest mit 1 bis 10 Kohlenstoffatomen, jedes $R^{III}$ und $R^{IV}$ unabhängig ausgewählt ist aus der Gruppe bestehend aus Wasserstoff oder einem Alkyl- oder Arylrest mit 1 bis 6 Kohlenstoffatomen, m gleich 1 und (n+s) gleich 2 oder 3 ist und n und s jeweils größer als oder gleich O sind und $(OR^I)$ in Alpha-Stellung zur Carbonylgruppe steht.

3. Masse nach Anspruch 1, worin die Polycarbonsäure durch die folgende Formel repräsentiert ist:

$$(R^IO)_mR(COOR^{II})_n$$

oder deren Salze, wobei R ein linearer oder verzweigter gesättigter aliphatischer Kohlenwasserstoffrest mit 2 bis 10 Kohlenstoffatomen ist, $R^I$ ausgewählt ist aus der Gruppe bestehend aus Wasserstoff oder einem Alkyl-, Acyl- oder Carbonyldioxyrest mit 1 bis 6 Kohlenstoffatomen, $R^{II}$ ausgewählt ist aus der Gruppe bestehend aus Wasserstoff oder einem Alkylrest mit 1 bis 20 Kohlenstoffatomen, m gleich 1 und n gleich 2 oder 3 ist und $(OR^I)$ in Alpha-Stellung zur Carbonylgruppe steht.

4. Masse nach Anspruch 1, worin die Polycarbonsäure ausgewählt ist aus der Gruppe bestehend aus Zitronensäure und Äpfelsäure sowie deren Salzen.

5. Masse nach Anspruch 1, worin die Polycarbonsäure in einer Menge von bis zu 4 Gew.-%, bezogen auf das Gewicht der Gesamtmasse, eingesetzt ist.

6. Masse nach Anspruch 1, worin die Polycarbonsäure in einer Menge von 0,05 bis 4 Gew.-%, bezogen auf das Gewicht der Gesamtmasse, eingesetzt ist.

7. Masse nach Anspruch 1, worin die Menge der Polycarbonsäure im Bereich von 0,1 bis 2 Gew.-%, bezogen auf das Gewicht der Gesamtmasse, liegt.

8. Masse nach Anspruch 1, worin das Verhältnis von Polyphenylenäther zu Polyamid im Bereich von 5 bis 95 Gew.-% des ersteren zu 95 bis 5 Gew.-% des letzteren liegt.

9. Masse nach Anspruch 1, worin das Verhältnis von Polyphenylenäther zu Polyamid im Bereich von 30 bis 70 Gew.-% des ersteren zu 70 bis 30 Gew.-% des letzteren liegt.

10. Masse nach Anspruch 1, worin der Polyphenylenäther ein Homopolymer oder ein Copolymer mit Einheiten der wiederkehrenden Strukturformel ist:

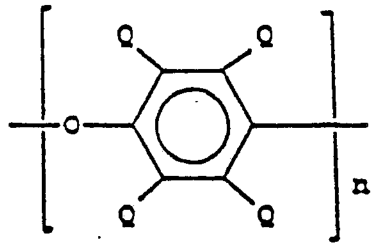

worin das Sauerstoffätheratom einer Einheit mit dem Benzolkern der nächsten verbundenen Einheit verbunden ist und n eine positive ganze Zahl und mindestens gleich 50 ist und jedes Q unabhängig ein einwertiger Substituent ist, ausgewählt aus der Gruppe bestehend aus Wasserstoff, Halogen, Kohlenwasserstoff- und Kohlenwasserstoffoxy-Resten, frei von einem tertiären Alpha-Kohlenstoffatom, aus Halogenkohlenwasserstoff- und Halogenkohlenwasserstoffoxy-Resten, frei von einem tertiären Alpha-Kohlenstoffatom mit mindestens 2 Kohlenstoffatomen zwischen dem Halogenatom und dem Phenylkern.

11. Masse nach Anspruch 1, worin der Polyphenylenäther Poly(2,6 - dimethyl - 1,4 - phenylen)äther ist.

12. Masse nach Anspruch 1, worin das Polyamid ausgewählt ist aus der Gruppe bestehend aus Polyamid 6, Polyamid 6/6, Polyamid 12 und Polyamid 6/10.

13. Masse nach Anspruch 11, worin das Polyamid Polyamid 6/6 ist.

14. Masse nach Anspruch 11, worin das Polyamid Polyamid 6 ist.

15. Masse nach Anspruch 1, worin ein Amin, das entweder ein primäres oder sekundäres Amin ist, in Kombination mit der Polycarbonsäure benutzt wird.

16. Masse nach Anspruch 15, worin das Amin Dibutylamin ist.

17. Masse nach Anspruch 15, worin das Amin in einer Menge von bis zu 3 Gew.-%, bezogen auf die Gesamtmasse, vorhanden ist.

18. Masse nach Anspruch 15, worin das Amin in einer Menge von 0,35 bis 1 Gew.-%, bezogen auf die Gesamtmasse, vorhanden ist.

19. Masse nach Anspruch 1, die weiter bis zu 50 Gew.-%, eines Reglerharzes, bezogen auf die Gesamtmasse, umfaßt.

20. Masse nach Anspruch 19, worin das Reglerharz in einer Menge von bis zu 35 Gew.-%, bezogen auf die Gesamtmasse, vorhanden ist.

21. Masse nach Anspruch 19, worin das Reglerharz ein hydriertes, teilweise hydriertes oder nicht hydriertes Styrol-Butadien-Diblock- oder Styrol - Butadien - Styrol - Triblock - Copolymer ist.

22. Masse nach Anspruch 19, worin das Reglerharz ein Styrol-Homopolymer oder -Copolymer ist.

23. Masse nach Anspruch 19, worin das Reglerharz ein Kautschuk-modifiziertes, hochschlagfestes Polystyrol ist.

24. Masse nach Anspruch 1, die weiter bis zu 50 Gew.-% Glasfasern umfaßt.

25. Masse nach Anspruch 1, die weiter bis zu 30 Gew.-% Glasfasern umfaßt.

26. Masse nach Anspruch 1, die weiter mindestens ein Additiv umfaßt, das ausgewählt ist aus der Gruppe bestehend aus Entflammungshemmern, Farbmitteln und Stabilisatoren.

27. Masse nach Anspruch 26, wobei der Stabilisator ausgewählt ist aus der Gruppe bestehend aus gehinderten Phenolen, Phosphiten und Phosphaten, Kalium- und Kupfer(I)-Salzen und deren Kombinationen.

28. Verfahren zum Herstellen der Polyphenylenäther - Polyamid - Massen nach Anspruch 1, gekennzeichnet durch Vermischen eines oder mehrerer Polyphenylenätherharze (a), eines oder mehrerer Polyamidharze (b) und eines oder mehrerer aliphatischer Polycarbonsäuren (c).

29. Verfahren nach Anspruch 28, bei dem der Polyphenylenäther, Polyamid und Polycarbonsäure schmelzvermischt werden.

30. Verfahren nach Anspruch 28, bei dem die Polycarbonsäuren die nach Anspruch 2 sind.

31. Verfahren nach Anspruch 28, bei dem die Polycarbonsäuren die nach Anspruch 3 sind.

32. Verfahren nach Anspruch 28, bei dem die Polycarbonsäure ausgewählt ist aus der Gruppe bestehend aus Zitronensäure, Äpfelsäure und deren Salzen.

33. Verfahren nach Anspruch 28, bei dem die Polycarbonsäure in einer Menge von bis zu 4 Gew.-%, bezogen auf das Gewicht der Gesamtmasse, eingesetzt wird.

34. Verfahren nach Anspruch 28, bei dem die eigenschaftsverbessernde Menge an Polycarbonsäure im Bereich von 0,1 bis 2 Gew.-%, bezogen auf das Gewicht der Gesamtmasse, liegt.

35. Verfahren nach Anspruch 28, bei dem das Verhältnis von Polyphenylenäther zu Polyamid im Bereich von 5 bis 95 Gew.-% des ersteren zu 95 bis 5 Gew.-% des letzteren liegt.

36. Verfahren nach Anspruch 28, bei dem das Verhältnis von Polyphenylenäther zu Polyamid im Bereich von 30 bis 70 Gew.-% des ersteren zu 70 bis 30 Gew.-% des letzteren liegt.

37. Verfahren nach Anspruch 28, bei dem die Polyphenylenäther solche nach Anspruch 10 sind.

38. Verfahren nach Anspruch 28, bei dem der Polyphenylenäther Poly(2,6 - dimethyl - 1,4 - phenylen)äther ist.

39. Verfahren nach Anspruch 28, bei dem das Polyamid ausgewählt ist aus der Gruppe bestehend aus Polyamid 6, Polyamid 6/6, Polyamid 12 und Polyamid 6/10.

40. Verfahren nach Anspruch 39, bei dem das Polyamid Polyamid 6/6 ist.

41. Verfahren nach Anspruch 28, das weiter das Hinzumischen von bis zu 3 Gew.-% eines primären oder sekundären Amins umfaßt.

42. Verfahren nach Anspruch 28, das weiter das Zumischen von bis zu 50 Gew.-% eines Reglerharzes umfaßt.

43. Verfahren nach Anspruch 28, das weiter das Zumischen von bis zu 50 Gew.-% Glasfasern umfaßt.

44. Verfahren zum Herstellen der Polyphenylenäther-Polyamid-Massen nach Anspruch 1, gekennzeichnet durch Vorvermischen von einer oder mehreren aliphatischen Polycarbonsäuren (c) mit entweder dem Polyphenylenäther (a) oder dem Polyamid (b) vor dem Vermengen mit dem anderen Polymer.

45. Verfahren nach Anspruch 44, bei dem die Polycarbonsäure vor dem Vermengen mit dem Polyamid mit dem Polyphenylenäther vermischt wird.

46. Verfahren nach Anspruch 44, bei dem die Polycarbonsäuren solche gemäß Anspruch 2 sind.

47. Verfahren nach Anspruch 44, bei dem die Polycarbonsäuren solche nach Anspruch 3 sind.

48. Verfahren nach Anspruch 44, bei dem die Polycarbonsäure ausgewählt ist aus der Gruppe bestehend aus Zitronensäure, Äpfelsäure und deren Salzen.

49. Verfahren nach Anspruch 44, bei dem die Polycarbonsäure in einer Menge von bis zu 4 Gew.-%, bezogen auf das Gewicht der Gesamtmasse, eingesetzt wird.

50. Verfahren nach Anspruch 44, bei dem die Menge an Polycarbonsäure im Bereich von 0,1 bis 2 Gew.-%, bezogen auf das Gewicht der Gesamtmasse, liegt.

51. Verfahren nach Anspruch 44, bei dem das Verhältnis von Polyphenylenäther zu Polyamid 5 bis 95 Gew.-% des ersteren zu 95 bis 5 Gew.-% des letzteren beträgt.

52. Masse nach Anspruch 44, bei der das Verhältnis von Polyphenylenäther zu Polyamid von 30 bis 70 Gew.-% des ersteren zu 70 bis 30 Gew.-% des letzteren beträgt.

53. Masse nach Anspruch 44, bei der die Polyphenylenäther solche nach Anspruch 10 sind.

54. Verfahren nach Anspruch 44, bei dem der Polyphenylenäther Poly(2,6 - dimethyl - 1,4 - phenylen)äther ist.

55. Verfahren nach Anspruch 44, bei dem das Polyamid ausgewählt ist aus der Gruppe bestehend aus Polyamid 6/10.

56. Verfahren nach Anspruch 44, bei dem das Polyamid Polyamid 6/6 ist.

57. Verfahren nach Anspruch 44, das weiter das Zumischen von bis zu 3 Gew.-% eines primären oder sekundären Amins umfaßt.

58. Verfahren nach Anspruch 57, bei dem das Amin mit dem Polymerharz und der Polycarbonsäure vorvermischt wird.

59. Verfahren nach Anspruch 57, bei dem das Amin vor dem Vorvermischen mit der Polycarbonsäure umgesetzt wird.

60. Verfahren nach Anspruch 44, das weiter das Zumischen von bis zu 50 Gew.-% mindestens eines Reglerharzes umfaßt.

61. Verfahren nach Anspruch 60, bei dem das Reglerharz oder die Reglerharze entweder mit dem Polyphenylenäther oder dem Polyamid oder beiden unabhängig vorvermischt wird/werden.

62. Formteil, hergestellt aus der Masse nach Anspruch 1.

63. Formteil, hergestellt aus der Masse nach Anspruch 3.

**Revendications**

1. Nouvelle composition de résine, comprenant un mélange et/ou le produit de réaction a) d'une ou plusieurs résines de polyoxyphénylène, b) d'une ou plusieurs résines de polyamide et c) d'un ou plusieurs acides polycarboxyliques aliphatiques, représentés par le formule:

$$(R^IO)_mR(COOR^{II})_n(CONR^{III}R^{IV})_s$$

ou les sels de ceux-ci, dans laquelle R est un groupe hydrocarboné aliphatique saturé à chaîne linéaire ou ramifiée comportant de 2 à 20 atomes de carbone; $R^I$ est choisi parmi un atome d'hydrogène, ou un groupe alkyle, aryle, acyle ou carbonyl dioxy comportant de 1 à 10 atomes de carbone, chaque groupe $R^{II}$ est choisi indépendamment parmi un atome d'hydrogène, ou un groupe alkyle ou aryle comportant de 1 à 20 atomes de carbone; chacun des groupes $R^{III}$ et $R^{IV}$ est choisi indépendamment parmi un atome d'hydrogène, ou un groupe alkyle ou aryle comportant de 1 à 10 atomes de carbone; m est égal à 1 et (n+s) est supérieur ou égal à 2, et n et s sont supérieurs ou égaux chacun à zéro; et dans laquelle le groupe ($OR^I$) est en position alpha ou béta par rapport à un groupe carbonyle et au moins deux groupes carbonyle sont séparés par 2 à 6 atomes de carbone.

2. Composition suivant la revendication 1, dans laquelle l'acide polycarboxylique est représenté par la formule:

$$(R^IO)_mR(COOR^{II})_n(CONR^{III}R^{IV})_s$$

ou les sels de celui-ci, dans laquelle R représente un groupe hydrocarboné aliphatique saturé à chaîne linéaire ou ramifiée comportant de 2 à 10 atomes de carbone; $R^I$ est choisi parmi un atome d'hydrogène, ou un groupe alkyle, aryle, acyle ou carbonyl dioxy comportant de 1 à 6 atomes de carbone; chacun des groupes $R^{II}$ est choisi indépendamment parmi un atome d'hydrogène, ou un groupe alkyle ou aryle comportant de 1 à 10 atomes de carbone; chacun des groupes $R^{III}$ et $R^{IV}$ est choisi indépendamment parmi un atome d'hydrogène, ou un groupe alkyle ou aryle comportant de 1 à 6 atomes de carbone; m est égal à 1 et (n+s) est égal à 2 ou 3, et n et s sont supérieurs ou égaux chacun à 0, et dans laquelle le groupe ($OR^I$) est en position alpha par rapport au groupe carbonyle.

3. Composition suivant la revendication 1, dans laquelle l'acide polycarboxylique est représenté par la formule:

$$(R^IO)_mR(COOR^{II})_n$$

ou les sels de celui-ci, dans laquelle R représente un groupe hydrocarboné aliphatique saturé ramifié ou linéaire comportant de 2 à 10 atomes de carbone; $R^I$ est choisi parmi un atome d'hydrogène, ou un groupe alkyle, acyle ou carbonyldioxy comportant de 1 à 6 atomes de carbone; $R^{II}$ est choisi parmi un atome d'hydrogène ou un groupe alkyle comportant de 1 à 20 atomes de carbone; m est égal à 1 et n est égal à 2 ou 3; et dans laquelle le groupe ($OR^I$) est en position alpha par rapport au groupe carbonyle.

4. Composition suivant la revendication 1, dans laquelle l'acide polycarboxylique est choisi parmi l'acide citrique et l'acide malique ainsi que les sels de ceux-ci.

5. Composition suivant la revendication 1, dans laquelle l'acide polycarboxylique est utilisé selon une quantité allant jusqu'à 4% en poids par rapport au poids de la totalité de la composition.

6. Composition suivant la revendication 1, dans laquelle l'acide carboxylique est utilisé selon une quantité de 0,05 à 4% en poids par rapport au poids de la totalité de la composition.

7. Composition suivant la revendication 1, dans laquelle la quantité de l'acide polycarboxylique est de 0,1 à 2% en poids par rapport au poids de la totalité de la composition.

8. Composition suivant la revendication 1, dans laquelle le rapport du polyoxyphénylène au polyamide est de 5 à 95% en poids pour le premier pour une quantité de 95 à 5% en poids du dernier.

9. Composition suivant la revendication 1, dans laquelle le rapport du polyoxyphénylène au polyamide, est de 30 à 70% en poids pour le premier pour une quantité de 70 à 30% en poids du dernier.

10. Composition suivant la revendication 1, dans laquelle le polyoxyphénylène, est un homopolymère ou un copolymère comportant des motifs de base de formule:

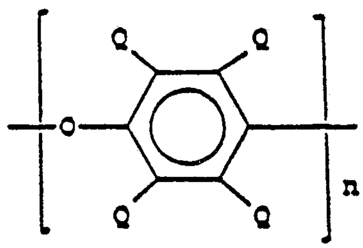

dans laquelle l'atome d'oxygène d'éther d'un motif est lié au noyau benzènique du motif lié suivant, et n est un entier positif d'au moins 50, et chaque groupe Q représente indépendamment un substituant monovalent choisi parmi un atome d'hydrogène, un atome d'halogène, les groupes hydrocarbonés et hydrocarbyloxy exempts d'un atome de carbone tertiaire en position alpha et les groupes hydrocarbonés et hydrocarbyloxy halogénés exempts d'un atome de carbone tertiaire en position alpha et comportant au moins 2 atomes de carbone entre l'atome d'halogène et le noyau phényle.

11. Composition suivant la revendication 1, dans laquelle le polyoxyphénylène est le poly(2,6 diméthyl - 1,4 - oxyphénylène).

12. Composition suivant la revendication 1, dans laquelle le polyamide est choisi parmi le polyamide 6, le polyamide 6,6, le polyamide 12 et le polyamide 6/10.

13. Composition suivant la revendication 11, dans laquelle le polyamide est du polyamide 6/6.

14. Composition suivant la revendication 11, dans laquelle le polyamide est du polyamide 6.

15. Composition suivant la revendication 1, dans laquelle on utilise une amine qui est soit primaire ou secondaire en combinaison avec l'acide polycarboxylique.

16. Composition suivant la revendication 15, dans laquelle l'amine est de la butylamine.

17. Composition suivant la revendication 15, dans laquelle l'amine est présente en une quantité allant jusqu'à 3% en poids par rapport à la totalité de la composition.

18. Composition suivant la revendication 15, dans laquelle l'amine est présente en une quantité de 0,35 à 1% en poids par rapport à la totalité de la composition.

19. Composition suivant la revendication 1, comprenant en outre jusqu'à 50% en poids par rapport à la totalité de la composition d'une résine modificatrice.

20. Composition suivant la revendication 19, dans laquelle la résine modificatrice est présente selon une quantité allant jusqu'à 35% en poids par rapport à la totalité de la composition.

21. Composition suivant la revendication 19, dans laquelle la résine modificatrice, est un copolymère triséquencé styrène - butadiène - styrène ou diséquencé styrène - butadiène hydrogéné, partiellement hydrogéné ou non hydrogéné.

22. Composition suivant la revendication 19, dans laquelle la résine modificatrice est un homopolymère ou un copolymère de styrène.

23. Composition suivant la revendication 22, dans laquelle la résine modificatrice est un polystyrène à résistance élevée aux chocs modifié par un diène.

24. Composition suivant la revendication 1, comprenant en outre jusqu'à 50% en poids de fibre de verre.

25. Composition suivant la revendication 1, comprenant en outre jusqu'à 30% en poids de fibres de verre.

26. Composition suivant la revendication 1, comprenant en outre au moins un additif choisi parmi des retardateurs d'inflammation, des colorants et des agents stabilisants.

27. Composition suivant la revendication 26, dans laquelle l'agent stabilisant est choisi parmi les phénols encombrés, les phosphites et les phosphates, les sels cuivreux et de potassium ainsi que les combinaisons de ceux-ci.

28. Procédé de préparation des compositions de polyoxyphénylène et de polyamide suivant la revendication 1, caractérisé en ce qu'on mélange une ou plusieurs résines de polyoxyphénylène (a), une ou plusieurs résines de polyamide (b) et au moins un acide polycarboxylique aliphatique (c).

29. Procédé suivant la revendication 28, dans lequel le polyoxyphénylène, le polyamide et l'acide polycarboxylique, sont mélangés à l'état fondu.

30. Procédé suivant la revendication 28, dans lequel les acides polycarboxyliques sont ceux définis dans la revendication 2.

31. Procédé suivant la revendication 28, dans lequel les acides polycarboxyliques sont ceux définis dans la revendication 3.

32. Procédé suivant la revendication 28, dans lequel l'acide polycarboxylique est choisi parmi l'acide citrique, l'acide malique et les sels de ceux-ci.

33. Procédé suivant la revendication 28, dans lequel l'acide polycarboxylique est utilisé en une quantité allant jusqu'à 4% en poids par rapport au poids de la totalité de la composition.

34. Procédé suivant la revendication 28, dans lequel la quantité d'acide polycarboxylique améliorant les propriétés, est une quantité allant de 0,1 à 2% en poids par rapport au poids de la totalité de la composition.

35. Procédé suivant la revendication 28, dans lequel le rapport du polyoxyphénylène au polyamide est de 5 à 95% en poids du premier pour 95 à 5% en poids du deuxième.

36. Procédé suivant la revendication 28, dans lequel le rapport du polyoxyphénylène au polyamide, est de 30 à 70% en poids du premier pour 70 à 30% en poids du deuxième.

37. Procédé suivant la revendication 28, dans lequel les polyoxyphénylènes sont ceux définis dans la revendication 10.

38. Procédé suivant la revendication 28, dans lequel le polyoxyphénylène, est du poly(2,6 - diméthyl - 1,4 - oxyphénylène).

39. Procédé suivant la revendication 28, dans lequel le polyamide est choisi parmi le polyamide 6, le polyamide 6/6, le polyamide 12 et le polyamide 6/10.

40. Procédé suivant la revendication 39, dans lequel le polyamide est du polyamide 6/6.

41. Procédé suivant la revendication 28, dans lequel on mélange en outre jusqu'à 3% en poids d'une amine primaire ou secondaire.

42. Procédé suivant la revendication 28, dans lequel on mélange en outre jusqu'à 50% en poids d'une résine modificatrice.

43. Procédé suivant la revendication 28, dans lequel on mélange en outre jusqu'à 50% en poids de fibres de verre.

44. Procédé de préparation des compositions de polyoxyphénylène et de polyamide suivant la revendication 1, caractérisé en ce qu'on mélange préalablement un ou plusieurs acides polycarboxyliques aliphatiques (c) soit avec le polyoxyphénylène (a) ou le polyamide (b) avant de les mélanger avec l'autre polymère.

45. Procédé suivant la revendication 44, dans lequel l'acide polycarboxylique est préalablement mélangé avec le polyoxyphénylène avant d'être mélangé avec le polyamide.

46. Procédé suivant la revendication 44, dans lequel les acides polycarboxyliques sont ceux définis dans la revendication 2.

47. Procédé suivant la revendication 44, dans lequel les acides polycarboxyliques sont ceux définis dans la revendication 3.

48. Procédé suivant la revendication 44, dans lequel l'acide polycarboxylique est choisi parmi l'acide citrique, l'acide malique et les sels de ceux-ci.

49. Procédé suivant la revendication 44, dans lequel l'acide carboxylique est utilisé en une quantité allant jusqu'à 4% en poids par rapport au poids de la totalité de la composition.

50. Procédé suivant la revendication 44, dans lequel la quantité d'acide polycarboxylique est de 0,1 à 2% en poids par rapport au poids de la totalité de la composition.

51. Procédé suivant la revendication 44, dans lequel le rapport du polyoxyphénylène au polyamide est de 5 à 95% en poids du premier pour 95 à 5% en poids du dernier.

52. Composition suivant la revendication 44, dans laquelle le rapport du polyoxyphénylène au polyamide, est de 30 à 70% en poids du premier pour 70 à 30% en poids du dernier.

53. Composition suivant la revendication 44, dans laquelle les polyoxyphénylènes sont ceux définis dans la revendication 10.

54. Procédé suivant la revendication 44, dans lequel le polyoxyphénylène, est le poly(2,6 - diméthyl - 1,4 - oxyphénylène).

55. Procédé suivant la revendication 44, dans lequel le polyamide comprend du polyamide 6/10.

56. Procédé suivant la revendication 44, dans lequel le polyamide est du polyamide 6/6.

57. Procédé suivant la revendication 44, dans lequel on mélange en outre jusqu'à 3% en poids d'une amine primaire ou secondaire.

58. Procédé suivant la revendication 57, dans lequel l'amine est préalablement mélangée avec la résine de polymère et l'acide polycarboxylique.

59. Procédé suivant la revendication 57, dans lequel on fait réagir préalablement l'amine avec l'acide polycarboxylique avant de procéder au mélange préalable.

60. Procédé suivant la revendication 44, dans lequel on mélange en outre jusqu'à 50% en poids d'au moins une résine modificatrice.

61. Procédé suivant la revendication 60, dans lequel on mélange préalablement la ou les résines modificatrices soit avec le polyoxyphénylène ou le polyamide ou indépendamment avec chacun d'eux.

62. Article moulé préparé à partir de la composition suivant la revendication 1.

63. Article moulé préparé à partir de la composition suivant la revendication 3.